# EUROPÄISCHE PATENTSCHRIFT

(11) **EP 3 227 161 B1**
(45) Veröffentlichungstag und Bekanntmachung des Hinweises auf die Patenterteilung: **08.07.2020**
(21) Anmeldenummer: 15801362.3
(22) Anmeldetag: 18.11.2015
(51) Int. Cl.: B62D 1/06, B62D 1/04

(54) **SENSORSYSTEM FÜR EIN LENKRAD EINES KRAFTFAHRZEUGS, LENKRAD MIT EINEM SOLCHEN SENSORSYSTEM UND VERFAHREN ZUM BETRIEB EINES SOLCHEN SENSORSYSTEMS**
SENSOR SYSTEM FOR A VEHICLE STEERING WHEEL, STEERING WHEEL WITH SUCH A SENSOR SYSTEM AND METHOD TO OPERATE SUCH A SYSTEM
SYSTÈME DE CAPTEUR POUR UN VOLANT DE VEHICULE, VOLANT AVEC UN TEL SYTÈME ET PROCÉDÉ POUR OPÉRER UN TEL SYSTÈME

(30) Priorität: 04.12.2014 DE 102014117820
(43) Veröffentlichungstag der Anmeldung: 11.10.2017
(73) Patentinhaber: Valeo Schalter und Sensoren GmbH, 74321 Bietigheim-Bissingen (DE)
(72) Erfinder: STAUDE, Sascha, 74321 Bietigheim-Bissingen (DE); MAYR, Alexander, 74321 Bietigheim-Bissingen (DE); KAISER, Frank, 74321 Bietigheim-Bissingen (DE)
(74) Vertreter: Pothmann, Karsten
(86) Internationale Anmeldenummer: PCT/EP2015/076937
(87) Internationale Veröffentlichungsnummer: WO 2016/087203

(56) Entgegenhaltungen:
- WO-A1-2014/079735
- WO-A1-2015/052667
- DE-A1-102011 084 903

## Beschreibung

Die Erfindung betrifft ein Sensorsystem für ein Lenkrad eines Kraftfahrzeugs mit wenigstens einer kapazitiven Sensoreinrichtung, wenigstens einer Heizeinrichtung und mit wenigstens einer Steuereinrichtung, wobei die kapazitive Sensoreinrichtung wenigstens eine elektrisch leitfähige Sensorstruktur aufweist und zur Erkennung einer Anwesenheit einer menschlichen Hand in einem Greifbereich eines Lenkrads ausgebildet ist, wobei das Sensorsystem derart ausgebildet ist, dass die Anwesenheit einer menschlichen Hand in einem Detektionsbereich der Sensorstruktur jeweils eine erfassbare, der Sensorstruktur zugeordnete Änderung einer kapazitiven Kopplung der Sensorstruktur mit der Umgebung und/oder einer Referenzelektrode gegenüber einem Referenzzustand ohne Anwesenheit einer Hand im Detektionsbereich der Sensorstruktur bewirkt, wobei die Heizeinrichtung wenigstens eine elektrisch leitfähige Heizstruktur zur Heizung des Lenkrades aufweist, und wobei die Steuereinrichtung zur Ansteuerung der Sensoreinrichtung und/oder zur Ansteuerung der Heizeinrichtung ausgebildet ist, wobei das Sensorsystem dazu ausgebildet ist, die Sensoreinrichtung und die Heizeinrichtung aufeinander abgestimmt anzusteuern.

Außerdem betrifft die Erfindung ein Lenkrad mit einem Sensorsystem mit einer kapazitiven Sensoreinrichtung, wobei das Sensorsystem insbesondere zur Hands-On-Off-Erkennung ausgebildet ist, sowie ein Verfahren zum Betrieb eines solchen Sensorsystems.

Sensorsysteme für Lenkräder von Kraftfahrzeugen zur Hands-On-Off-Erkennung mit kapazitiven Sensoreinrichtungen, auch in Kombination mit in das Lenkrad integrierten Heizeinrichtungen, sind aus dem Stand der Technik grundsätzlich bekannt, beispielsweise aus der DE 203 09 603 U1, der EP 1 491 409 B1, der DE 10 2009 058 138 A1, der WO 2013/117719 A1 oder der DE 10 2011 084 903 A1. WO 2014/079735 A1 offenbart ein Sensorsystem gemäß Oberbegriff des Anspruchs 1.

Die Sensorgenauigkeit bzw. die Sensorempfindlichkeit einer kapazitiven Sensoreinrichtung ist dabei umso höher, je geringer die Störeinflüsse sind, welche auf die kapazitive Sensoreinrichtung wirken, wobei insbesondere ein elektrischer Leiter, wie beispielsweise ein Heizleiter oder ein metallischer Lenkradkern, im elektrischen Feld einer Sensorkapazität eine störende kapazitive Kopplung bewirken kann. Maßnahmen zur Verringerung der Störeinflüsse auf die kapazitive Sensoreinrichtung sind dabei aus dem Stand der Technik ebenfalls grundsätzlich bekannt.

Um Störeinflüsse durch die Heizeinrichtung auf die kapazitive Sensoreinrichtung zu verringern, schlägt die DE 10 2011 084 903 A1 beispielsweise vor, in radialer Richtung zwischen der Heizeinrichtung und der Sensoreinrichtung ein Abschirmelement anzuordnen, um die Sensoreinrichtung von der Heizeinrichtung kapazitiv zu entkoppeln. Die Abschirmung der Sensoreinrichtung kann dabei weiter verbessert werden, wenn das Abschirmelement elektrisch leitfähig ist und mit einem definierten elektrischen Potenzial beaufschlagt werden kann. Eine derartige Anordnung, bei welcher die Heizeinrichtung nach außen durch ein Abschirmelement abgeschirmt ist, ist jedoch nachteilig in Bezug auf die Heizleistung.

Es ist Aufgabe der Erfindung, ein verbessertes Sensorsystem für ein Lenkrad bereitzustellen sowie ein verbessertes Lenkrad mit einem solchen Sensorsystem und ein verbessertes Verfahren zum Betrieb eines solchen Sensorsystems, wobei es insbesondere Aufgabe der Erfindung ist, ein Sensorsystem mit möglichst wenig auf die Sensoreinrichtung wirkenden Störeinflüssen bereitzustellen, ohne den Wirkungsgrad der Heizleistung zu verschlechtern.

Diese Aufgabe wird erfindungsgemäß durch ein erfindungsgemäßes Sensorsystem, durch ein erfindungsgemäßes Lenkrad sowie durch ein erfindungsgemäßes Verfahren gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Sensorsystem ist dadurch gekennzeichnet, dass die Sensoreinrichtung und die Heizeinrichtung derart aufeinander abgestimmt ansteuerbar sind, dass eine störende kapazitive Kopplung der Sensoreinrichtung mit der Heizeinrichtung und/oder in einem funktionsgemäßen Einbauzustand des Sensorsystems in einem Lenkrad mit Komponenten des Lenkrads während der Erfassung einer Änderung der kapazitiven Kopplung der Sensorstruktur mit der Umgebung und/oder einer Referenzelektrode reduziert wird, wobei während der Erfassung einer Änderung der kapazitiven Kopplung der Sensorstruktur mit der Umgebung und/oder einer Referenzelektrode wenigstens eine Heizstruktur (12) allpollig abschaltbar ist. In einigen Fällen kann eine störende kapazitive Kopplung der Sensoreinrichtung mit Komponenten des Sensorsystems und/oder in einem funktionsgemäßen Einbauzustand des Sensorsystems in einem Lenkrad mit Komponenten des Lenkrads sogar ganz vermieden werden.

Besonders bevorzugt können die Sensoreinrichtung und die Heizeinrichtung dabei zeitlich aufeinander abgestimmt angesteuert werden.

Die Sensoreinrichtung, die zur Erkennung der Anwesenheit einer menschlichen Hand in einem Greifbereich eines Lenkrads ausgebildet ist, ist dabei insbesondere zur Erkennung einer Annäherung und/oder einer Entfernung einer menschlichen Hand ausgebildet und damit insbesondere zur Erkennung einer Annäherung und/oder Entfernung einer menschlichen Hand an ein Lenkrad heran bzw. von diesem weg. Bevorzugt ist die Sensoreinrichtung auch dazu ausgebildet, eine Berührung des Lenkrads mit der Hand zu erkennen, insbesondere die Änderung einer Berührung einer menschlichen Hand am Lenkrad, beispielsweise eine Positionsänderung der Hand.

Das Erkennen der Anwesenheit einer menschlichen Hand mittels der kapazitiven Sensoreinrichtung erfolgt dabei nach dem sogenannten "kapazitiven Prinzip", welches darauf beruht, dass die Anwesenheit einer menschlichen Hand im Detektionsbereich der Sensorstruktur eine Änderung der kapazitiven Kopplung der Sensorstruktur mit der Umgebung und/oder einer Referenzelektrode gegenüber einem Referenzzustand ohne Anwesenheit der menschlichen Hand bewirkt, die messtechnisch erfasst werden kann. Dabei hängt die Änderung der kapazitiven Kopplung der Sensorstruktur im Wesentlichen von der Position der Hand im Detektionsbereich der Sensorstruktur ab, so dass insbesondere eine Annäherung und/oder Entfernung bzw. eine Berührung erkannt werden kann.

Kapazitive Sensoreinrichtungen weisen dazu wenigstens eine Sensorstruktur in Form einer Elektrode auf, welche die "Platte" eines elektrischen Kondensators bildet, wobei die Elektrode bzw. die Sensorstruktur die zu sensierende Oberfläche sein kann oder unterhalb der zu sensierenden Oberfläche angeordnet sein kann, in deren Nähe eine Anwesenheit einer menschlichen Hand erkannt werden soll. Dabei bildet die Umgebung und/oder eine in einem kapazitiven Kopplungsbereich der Sensorstruktur angeordnete Referenzelektrode, welche in der Regel an Masse (GND) anliegt und üblicherweise ein Potenzial von 0 Volt aufweist, die zweite "Platte" des Kondensators.

Wird nun ein elektrisch leitendes Material oder ein Dielektrikum, beispielsweise ein menschlicher Finger oder eine menschliche Hand in die unmittelbare Umgebung der Sensorstruktur gebracht, ändert sich die kapazitive Kopplung der Sensorstruktur mit der Umgebung und/oder einer Referenzelektrode, was messtechnisch erfasst werden kann. Anhand dieser Änderung der kapazitiven Kopplung der Sensorstruktur mit der Umgebung und/oder einer Referenzelektrode kann dann auf die Anwesenheit einer menschlichen Hand im Detektionsbereich der Sensorstruktur, insbesondere auf eine Annäherung und/oder Entfernung bzw. eine Berührung durch eine menschliche Hand, rückgeschlossen werden.

Die Sensorstruktur eines erfindungsgemäßen Sensorsystems ist bevorzugt flächig ausgebildet, wobei die Sensorstruktur dazu vorzugsweise ein Flachleiter oder eine elektrisch leitfähige Matte aufweist, insbesondere ein elektrisch leitfähiges Gewebe. Die Sensorstruktur kann aber auch nur durch wenigstens einen elektrischen Leiter, insbesondere durch einen Draht, gebildet sein, d.h. linienförmig ausgebildet sein. Besonders bevorzugt ist der Leiter in diesem Fall mäanderförmig angeordnet, so dass er sich über eine möglichst große Fläche erstreckt.

Besonders bevorzugt ist die Sensorstruktur dabei auf einem Träger aufgebracht, der unterhalb eines Lenkradbezugs angeordnet werden kann. Als besonders vorteilhaft hat sich beispielsweise eine Stofflage oder dergleichen als Träger erwiesen, wobei die Sensorstruktur in diesem Fall bevorzugt durch Sticken, Nähen, Kleben oder dergleichen auf dem Träger aufgebracht ist.

Die Sensoreinrichtung kann dabei lediglich eine einzige Sensorstruktur aufweisen, die sich in einem funktionsgemäßen Einbauzustand des Sensorsystems in einem Lenkrad beispielsweise über nahezu eine gesamte Lenkradfläche erstreckt, d.h. über nahezu den gesamten Lenkradumfang sowie in Umfassungsrichtung über nahezu die gesamte Lenkraddicke, oder mehrere Sensorstrukturen, die abschnittsweise verteilt über die Lenkradfläche angeordnet sein können.

Weist die Sensoreinrichtung mehrere Sensorstrukturen auf, sind diese vorzugsweise jeweils durch einzelne Drähte, Flachleiter, elektrisch leitfähige Gewebe und/oder Kombinationen daraus gebildet.

Durch die Verwendung eines Sensorsystems mit mehreren Sensorstrukturen, die in einem funktionsgemäßen Einbauzustand des Sensorsystems in einem Lenkrad verteilt über die Lenkradfläche angeordnet sind, ist eine ortsaufgelöste Erfassung der Annäherung und/oder Entfernung einer menschlichen Hand möglich, wobei eine Handposition in Umfangsrichtung detektierbar ist, wenn die Sensorstrukturen abschnittsweise in Umfangsrichtung angeordnet sind. Ein Umfassungswinkel, d.h. um wie viel Grad das Lenkrad in seiner Dicke umfasst wird, kann hingegen detektiert werden, wenn die Sensorstrukturen entsprechend abschnittsweise in Umfassungsrichtung angeordnet sind.

Je nach Unterteilung und Anordnung der Sensorstrukturen ist eine entsprechende Ortsauflösung möglich. Sind die einzelnen Sensorstrukturen jeweils nur abschnittsweise angrenzend aneinander, jedoch nicht zumindest teilweise kämmend angeordnet, ist lediglich eine abschnittsweise Erkennung möglich. D.h. es kann nur die Annäherung und/oder Entfernung einer menschlichen Hand in einzelnen Sektoren erkannt werden. Sind jedoch wenigstens zwei Sensorstrukturen entsprechend kämmend in einem Abschnitt angeordnet, d.h. derart, dass die Annäherung in einem Sektor die Änderung der kapazitiven Kopplung von wenigstens zwei Sensorstrukturen bewirkt, ist eine relativ genaue, ortsaufgelöste Erkennung der Annäherung möglich. D.h. es kann die Position einer Annäherung und/oder Entfernung einer menschlichen Hand innerhalb eines Sektors bzw. Abschnitts bestimmt werden.

In einer bevorzugten Ausgestaltung weist die Sensoreinrichtung dazu wenigstens zwei zumindest teilweise in Umfassungsrichtung und/oder in Umfangsrichtung zumindest teilweise kämmend angeordnete Sensorstrukturen auf und ist zur Bestimmung eines Umfassungswinkels und/oder zur Bestimmung einer Handposition in Umfangsrichtung ausgebildet. Besonders bevorzugt sind dazu wenigstens zwei Sensorstrukturen in Umfangs- und/oder Umfassungsrichtung mit sich jeweils linear und komplementär änderndem Anteil zueinander angeordnet. D.h. mit anderen Worten, dass die Sensoreinrichtung bevorzugt mehrere Sensorstrukturen aufweist, die abschnittsweise verteilt und zumindest teilweise ineinander kämmend über die Lenkradfläche verteilt angeordnet sind, insbesondere in Umfangs- und/oder Umfassungsrichtung.

Dabei sind die Änderung der kapazitiven Kopplung der Sensorstruktur mit der Umgebung und/oder einer Referenzelektrode vorzugsweise jeweils den einzelnen Sensorstrukturen zuordbar, so dass erkannt werden kann, in welchem Detektionsbereich und damit im Bereich welcher Sensorstruktur sich eine menschliche Hand oder ein Teil davon befindet.

Durch eine derartige, zumindest teilweise kämmende Anordnung der einzelnen Sensorstrukturen kann die Handposition am Lenkrad nicht nur sektorweise ermittelt werden, d.h. nur bereichsaufgelöst, sondern auch ortsaufgelöst innerhalb eines definierten Bereiches.

Dabei ist eine Handposition in Umfangsrichtung detektierbar, wenn die Sensorstrukturen zumindest teilweise kämmend in Umfangsrichtung angeordnet sind. Ein Umfassungswinkel, d.h. um wie viel Grad das Lenkrad in seiner Dicke umfasst wird, kann hingegen detektiert werden, wenn die Sensorstrukturen entsprechend zumindest teilweise kämmend in Umfassungsrichtung angeordnet sind. Bevorzugt sind wenigstens zwei Sensorstrukturen in Umfangs- und/oder Umfassungsrichtung mit sich jeweils linear und komplementär zueinander änderndem Anteil zueinander angeordnet.

In einer besonders bevorzugten Ausführungsform ist das Sensorsystem derart ausgebildet, dass zur Bestimmung eines Umfassungswinkels die Änderung der kapazitiven Kopplung der Sensorstrukturen mit der Umgebung und/oder einer Referenzelektrode wenigstens zweier in Umfassungsrichtung zumindest teilweise kämmend angeordneter Sensorstrukturen erfassbar ist und aus dem Verhältnis der erfassten Änderungen der kapazitiven Kopplungen dieser Sensorstrukturen mit der Umgebung und/oder einer Referenzelektrode der Umfassungswinkel bestimmbar ist.

Zur Bestimmung eines Umfassungswinkel beim Betrieb eines Sensorsystems mit wenigstens zwei, zumindest teilweise in Umfassungsrichtung kämmend angeordneten Sensorstrukturen werden zunächst die Änderungen der kapazitiven Kopplungen jeweils wenigstens zweier in Umfassungsrichtung kämmend angeordneter Sensorstrukturen erfasst. Anschließend wird aus dem Verhältnis der erfassten Änderungen der kapazitiven Kopplungen dieser Sensorstrukturen mit der Umgebung und/oder einer Referenzelektrode der Umfassungswinkel bestimmt.

Alternativ und/oder zusätzlich ist das Sensorsystem vorzugsweise derart ausgebildet, dass zur Bestimmung einer Handposition die Änderung der kapazitiven Kopplung der Sensorstrukturen mit der Umgebung und/oder einer Referenzelektrode wenigstens zweier in Umfangsrichtung zumindest teilweise kämmend angeordneter Sensorstrukturen erfassbar ist und aus dem Verhältnis der erfassten Änderungen der kapazitiven Kopplungen dieser Sensorstrukturen mit der Umgebung und/oder einer Referenzelektrode dieser Sensorstrukturen die Handposition bestimmbar ist.

Zur Bestimmung einer Handposition in Umfangsrichtung beim Betrieb eines Sensorsystems mit wenigstens zwei zumindest teilweise in Umfangsrichtung kämmend angeordneten Sensorstrukturen werden entsprechend zunächst die Änderungen der kapazitiven Kopplungen jeweils wenigstens zweier in Umfangsrichtung kämmend angeordneter Sensorstrukturen erfasst. Anschließend wird aus dem Verhältnis der erfassten Änderungen der kapazitiven Kopplungen dieser Sensorstrukturen mit der Umgebung und/oder einer Referenzelektrode die Handposition in Umfangsrichtung bestimmt.

Dabei ist wenigstens eine Sensorstruktur besonders bevorzugt keilförmig, insbesondere dreieckförmig ausgebildet und vorzugsweise weist wenigstens eine Sensorstruktur zumindest einen Bereich auf, der die Form eines rechtwinkligen Dreiecks hat, wobei vorzugsweise eine Seitenkante der Sensorstruktur eine Hypotenuse bildet.

Besonders bevorzugt sind wenigstens zwei Sensorstrukturen keilförmig, vorzugsweise dreieckförmig ausgebildet und kämmend angeordnet, insbesondere zumindest mit jeweils einem Bereich, der die Form eines rechtwinkligen Dreiecks aufweist. Dabei sind die Sensorstrukturen vorzugsweise derart kämmend angeordnet, dass eine Seitenkante der einen Sensorstruktur zumindest teilweise parallel zur Seitenkante der anderen Sensorstruktur angeordnet ist, wobei insbesondere die jeweils die Hypotenuse bildenden Seitenkanten zumindest teilweise parallel zueinander angeordnet sind. Es hat sich gezeigt, dass mit derartig ausgebildeten und angeordneten Sensorstrukturen auf einfache Art und Weise eine gute Ortsauflösung erreicht werden kann.

Die Heizstruktur ist bevorzugt ebenfalls flächig ausgebildet, wobei die Heizstruktur dazu vorzugsweise nach Art eines Flachleiters ausgebildet ist oder eine elektrisch leitfähige Matte aufweist, insbesondere ein elektrisch leitfähiges Gewebe. Die Heizstruktur kann aber auch nur durch wenigstens einen elektrischen Leiter, insbesondere durch einen einfachen Widerstandsdraht gebildet sein, d.h. linienförmig ausgebildet sein. Besonders bevorzugt ist der Leiter auch in diesem Fall mäanderförmig angeordnet, so dass er sich über eine möglichst große Fläche erstreckt.

Die Heizstruktur ist dabei besonders bevorzugt ebenfalls auf einem Träger aufgebracht, wobei die Heizstruktur vorzugsweise auf dem gleichen Träger aufgebracht ist, wie die Sensorstruktur. Die Heizstruktur kann dabei zusammen mit der Sensorstruktur auf einer Seite des Trägers aufgebracht sein wie die Sensorstruktur oder aber auf der anderen Seite des Trägers. Die erstgenannte Anordnung hat den Vorteil, dass eine bessere Wärmeübertragung in einen Griffbereich des Lenkrads möglich ist.

Selbstverständlich kann die Heizeinrichtung entsprechend, wie vorstehend im Zusammenhang mit der Sensoreinrichtung erläutert, auch nur lediglich eine einzige Heizstruktur aufweisen, die sich in einem funktionsgemäßen Einbauzustand des Sensorsystems in einem Lenkrad beispielsweise über nahezu eine gesamte Lenkradfläche erstreckt, d.h. über nahezu den gesamten Lenkradumfang sowie in Umfassungsrichtung über nahezu die gesamte Lenkraddicke, oder mehrere Heizstrukturen, die abschnittsweise verteilt über die Lenkradfläche angeordnet sein können.

Insbesondere wenn die Sensoreinrichtung mehrere Sensorstrukturen aufweist, kann es vorteilhaft sein, wenn die Heizeinrichtung ebenfalls mehrere Heizstrukturen aufweist, wobei in diesem Fall die Heizstrukturen besonders bevorzugt entsprechend den Sensorstrukturen strukturiert sind, d.h. entsprechend den Sensorstrukturen in einzelne Heizstrukturen unterteilt sind.

In einer bevorzugten Ausgestaltung des Sensorsystems sind wenigstens eine Sensorstruktur und wenigstens eine Heizstruktur zumindest teilweise in derselben Ebene angeordnet. Dadurch kann eine sehr kompakte Bauweise des Sensorsystems erreicht werden. Insbesondere kann durch eine derartige Anordnung die Integration der Heizeinrichtung zusätzlich zur Sensoreinrichtung in das Sensorsystem ohne eine Dickenzunahme des Sensorsystems umgesetzt werden, so dass keine zusätzlichen Maßnahmen erforderlich sind, um eine Zunahme des Lenkraddurchmessers zu vermeiden.

Weist die Sensoreinrichtung mehrere Sensorstrukturen und/oder mehrere Heizstrukturen auf, sind in einer bevorzugten Ausgestaltung sämtliche Sensorstrukturen und/oder sämtliche Heizstrukturen in derselben Ebene angeordnet.

Die Erfassung der Änderung der kapazitiven Kopplung der Sensorstruktur kann dabei auf übliche aus dem Stand der Technik bekannte Art und Weise erfolgen, insbesondere mittels eines Schwingkreises, oder mittels einer einfachen Spannungsmessung, beispielsweise mit Hilfe des von der Firma "Microchip" entwickelten CVD (Capacitive Voltage Divider)-Verfahrens.

Bevorzugt wird dabei das sogenannte CVD-Self-Verfahren eingesetzt, bei welchem die Änderung der kapazitiven Kopplung der Sensorstruktur mit der Umgebung erfasst wird oder das sogenannte CVD-Mutual-Verfahrens, bei welchem die Änderung der kapazitiven Kopplung der Sensorstruktur mit einer Referenzelektrode erfasst wird.

Besonders bevorzugt erfolgt die Erfassung der Änderung der kapazitiven Kopplung der Sensorstruktur jedoch mit einer Kombination des CVD-Self-Verfahrens mit dem CVD-Mutual-Verfahren.

Bei einer ganz besonders vorteilhaften Ausführungsform erfolgt die Erfassung der Änderung der kapazitiven Kopplung jedoch mittels des folgenden, beschriebenen Verfahrens, welches eine Weiterentwicklung des von der Firma "Microchip" entwickelten CVD-Verfahrens darstellt. Dieses bevorzugt eingesetzte Verfahren ist dadurch gekennzeichnet, dass zum Erkennen der Anwesenheit einer menschlichen Hand im Greifbereich des Lenkrads, insbesondere zum Erfassen der Änderung der kapazitiven Kopplung der zu sensierenden Sensorstruktur mit der Umgebung, in einem ersten Abtastzyklus in einem ersten Schritt eine Referenzkapazität und eine von der Sensorstruktur und der Umgebung gebildete Messkapazität jeweils mit einem definierten elektrischen Potenzial aufgeladen werden, wobei die Referenzkapazität mit einem ersten elektrischen Potenzial aufgeladen wird und die Messkapazität mit einem zweiten elektrischen Potenzial, in einem weiteren Schritt die Referenzkapazität und die von der Sensorstruktur und der Umgebung gebildete Messkapazität kurzgeschlossen werden, und in einem weiteren Schritt das sich zwischen der Messkapazität und der Referenzkapazität einstellende, resultierende elektrische Potenzial erfasst wird, wobei sich das resultierende elektrische Potenzial in Abhängigkeit vom ersten und zweiten elektrischen Potenzial sowie in Abhängigkeit von der Größe der Referenzkapazität und in Abhängigkeit von der Größe der Messkapazität einstellt.

In einem zweiten Abtastzyklus wird vorzugsweise im ersten Schritt die Referenzkapazität mit dem zweiten elektrischen Potenzial aufgeladen und die Messkapazität mit dem ersten elektrischen Potenzial, in einem weiteren Schritt werden dann vorzugsweise die Referenzkapazität und die von der Sensorstruktur und der Umgebung gebildete Messkapazität kurzgeschlossen, und in einem weiteren Schritt wird insbesondere das sich zwischen der Messkapazität und der Referenzkapazität einstellende, resultierende elektrische Potenzial erfasst, wobei sich das resultierende elektrische Potenzial in Abhängigkeit vom ersten und zweiten Potenzial sowie in Abhängigkeit von der Größe der Referenzkapazität und in Abhängigkeit von der Größe der Messkapazität einstellt.

Weist das Sensorsystem eine Referenzelektrode auf und bewirkt die Anwesenheit einer menschlichen Hand im Detektionsbereich einer Sensoreinrichtung einem Referenzzustand gegenüber eine erfassbare, der Sensorstruktur zugeordnete Änderung einer kapazitiven Kopplung der Sensorstruktur mit der Referenzelektrode, wird bevorzugt in einem weiteren Abtastzyklus, insbesondere in einem zweiten Abtastzyklus und/oder einem dritten und/oder vierten Abtastzyklus, vorzugsweise zusätzlich, in einem ersten Schritt jeweils die Referenzelektrode mit einem definierten elektrischen Potenzial beaufschlagt und in einem weiteren Schritt die kapazitive Kopplung der Sensorstruktur mit der Referenzelektrode erfasst, wobei die ermittelten Änderungen anschließend bevorzugt für die Auswertung miteinander verrechnet werden.

Bevorzugt wird nacheinander, vorzugsweise im Wechsel, insbesondere alternierend, die Änderung der kapazitiven Kopplung der Sensorstruktur mit der Umgebung und die Änderung der kapazitiven Kopplung der Sensorstruktur mit der Referenzelektrode erfasst.

Weist die Sensoreinrichtung des Lenkrads wenigstens zwei Sensorstrukturen auf, wird vorzugsweise wenigstens eine Sensorstruktur zumindest zeitweise als Referenzelektrode geschaltet, vorzugsweise sämtliche Sensorstrukturen.

In einigen Fällen kann es auch vorteilhaft sein, wenn wenigstens eine Heizstruktur zumindest zeitweise als Referenzelektrode geschaltet und betrieben wird.

Die Änderung der kapazitiven Kopplung der Sensorstruktur kann aber auch mithilfe eines Ladevorgangs, bei dem beispielsweise eine Stromänderung erfasst wird, gemessen werden, oder mittels anderer, entsprechend geeigneter Methoden.

In einer bevorzugten Ausgestaltung ist das Sensorsystem dazu ausgebildet, die Sensoreinrichtung und die Heizeinrichtung derart aufeinander abgestimmt anzusteuern, dass eine störende kapazitive Kopplung der Sensoreinrichtung mit der Heizeinrichtung während der Erfassung einer Änderung der kapazitiven Kopplung der Sensorstruktur mit der Umgebung und/oder einer Referenzelektrode reduziert wird, insbesondere vermieden wird. D.h. bevorzugt können die Heizeinrichtung und die Sensoreinrichtung so aufeinander abgestimmt angesteuert werden, dass die von der Heizeinrichtung verursachten, und auf die Sensoreinrichtung wirkenden Störeinflüsse reduziert oder sogar vermieden werden.

In der Erfindung ist das Sensorsystem derart ausgebildet, dass während der Erfassung einer Änderung der kapazitiven Kopplung der Sensorstruktur mit der Umgebung und/oder einer Referenzelektrode wenigstens eine Heizstruktur, die die gesamte Heizeinrichtung, allpolig abgeschaltet werden kann. Unter dem Begriff "allpolig abschalten" wird dabei das Trennen der Heizstruktur von beider Polen verstanden. D.h., wenn eine Heizstruktur allpolig abgeschaltet ist, ist diese Heizstruktur sowohl vom Pluspol als auch vom Minuspol elektrisch getrennt.

Dadurch kann auf besonders einfache Art und Weise eine sich nachteilig auf die Erkennungsqualität einer Annäherung und/oder Entfernung einer menschlichen Hand auswirkende kapazitive Kopplung der Heizeinrichtung mit der Sensoreinrichtung im Zeitpunkt der Messung vermieden werden, insbesondere ohne dass die Anordnung eines zusätzlichen Abschirmelements zwischen der Heizeinrichtung und der Sensoreinrichtung erforderlich ist, welche sich nachteilig auf den Wirkungsgrad der Heizeinrichtung auswirken würde.

In der Erfindung bildet wenigstens eine Heizstruktur zumindest teilweise eine Sensorstruktur, wobei die Heizstruktur während der Erfassung der Änderung der kapazitiven Kopplung der Sensorstruktur mit der Umgebung und/oder einer Referenzelektrode in diesem Fall allpolig abschaltbar sein muss, d.h. der Heizbetrieb einer Heizstruktur, die zumindest teilweise eine Sensorstruktur bildet, muss währen der Erfassung einer Änderung der kapazitiven Kopplung der Sensorstruktur mit der Umgebung und/oder einer Referenzelektrode ausgeschaltet werden können.

An einer derartigen Ausgestaltung ist besonders vorteilhaft, dass beispielsweise eine in einem Lenkrad vorhandene, herkömmliche Heizstruktur als Sensorstruktur verwendet werden kann und somit keine zusätzliche Sensorstruktur erforderlich ist. Dadurch kann zum einen ein Bauraumvorteil erzielt werden, insbesondere weil keine nennenswerte Dickenzunahme des Lenkrads aufgrund einer zusätzlichen Sensorstruktur erforderlich ist. Zum anderen kann eine Erhöhung der Masse des Lenkrads und damit des Massenträgheitsmoments des Lenkrades vermieden werden, was sich vorteilhaft auf die Fahreigenschaften auswirken kann, insbesondere auf das Schlingerverhalten.

In einer alternativen, aber ebenfalls vorteilhaften Ausgestaltung eines erfindungsgemäßen Sensorsystems sind die Heizeinrichtung und die Sensoreinrichtung derart aufeinander abgestimmt ansteuerbar, dass während der Erfassung einer Änderung der kapazitiven Kopplung der Sensorstruktur mit der Umgebung und/oder einer Referenzelektrode eine Heizleistung wenigstens einer Heizstruktur konstant ist.

Weist das Sensorsystem eine Heizeinrichtung mit wenigstens einer, von der Sensorstruktur verschiedenen Heizstruktur auf, die mit einem Pulsweitenmodulation-Signal ansteuerbar ist, sind vorzugsweise die Heizeinrichtung und die Sensoreinrichtung derart aufeinander abgestimmt ansteuerbar, dass die Erfassung der Änderung der kapazitiven Kopplung der Sensorstruktur mit der Umgebung und/oder einer Referenzelektrode erfolgt, während das Pulsweitenmodulations-Signal konstant ist. D.h., die Erfassung der Änderung der kapazitiven Kopplung der Sensorstruktur erfolgt zeitlich betrachtet während eines Rechteckpulses des Pulsweitenmodulations-Signals oder zwischen zwei Rechteckpulsen aber nicht auf einer Flanke des Pulsweitenmodulations-Signals, weder auf der steigenden Flanke noch auf der fallenden Flanke. In diesem Fall ist keine komplette Abschaltung der Heizeinrichtung während der Erfassung der Kapazitäten bzw. einer Kapazitätsänderung erforderlich.

Besonders bevorzugt sind die Sensoreinrichtung und die Heizeinrichtung jedoch derart aufeinander abgestimmt ansteuerbar, dass in einem funktionsgemäßen Einbauzustand des Sensorsystems in einem Lenkrad mit einem metallischen Lenkradkern eine störende kapazitive Kopplung der Sensoreinrichtung mit dem Lenkradkern während der Erfassung einer Änderung der kapazitiven Kopplung der Sensorstruktur mir der Umgebung und/oder der Referenzelektrode reduziert wird, insbesondere vermieden wird.

Dazu ist das Sensorsystem bevorzugt derart ausgebildet, dass in einem funktionsgemäßen Einbauzustand des Sensorsystems in einem Lenkrad mit einem metallischen Lenkradkern während der Erfassung der Änderung der kapazitiven Kopplung der Sensorstruktur mit der Umgebung und/oder einer Referenzelektrode wenigstens eine, von der Sensorstruktur verschiedene Heizstruktur derart mit einem definierten elektrischen Potenzial beaufschlagbar ist, dass die Heizstruktur als Abschirmelement gegenüber dem metallischen Lenkradkern wirkt, so dass eine störende kapazitive Kopplung zwischen dem Lenkradkern und der Sensoreinrichtung reduziert wird, insbesondere vermieden wird. D.h. bevorzugt ist wenigstens eine Heizstruktur als aktives Abschirmelement schaltbar, d.h. als sogenannter "Guard" bzw. Schirmungselektrode betreibbar. Sind mehrere Heizstrukturen vorhanden, sind vorzugsweise mehrere, insbesondere alle Heizstrukturen mit einem elektrischen Potenzial beaufschlagbar.

Dadurch kann in den meisten Anwendungsfällen das sich zwischen der Sensorstruktur und der Umgebung und/oder einer Referenzelektrode aufgrund der kapazitiven Kopplung bildende elektrische Feld positiv beeinflusst werden, insbesondere derart, dass eine Umladung der Grundkapazität der Sensoreinrichtung verringert wird, so dass eine Annäherung und/oder Entfernung einer menschlichen Hand eine größere Änderung der kapazitiven Kopplung bewirkt und somit messtechnisch einfacher und genauer und damit zuverlässiger erfasst werden kann. D.h. mit anderen Worten kann durch die Verwendung eines aktiven Abschirmelements die Auflösung des Sensorsystems verbessert werden, insbesondere das Signal-zu-Rausch-Verhältnis (SNR = Signal to Noise Ratio), wodurch die Erkennungsqualität erheblich gesteigert werden kann.

Besonders bevorzugt ist das Sensorsystem dabei derart ausgebildet, dass das Abschirmelement in Abhängigkeit eines Zustands der Sensoreinrichtung, insbesondere abhängig von der Sensorstruktur, mit einem elektrischen Potenzial beaufschlagt werden kann, insbesondere mit einem definierten elektrischen Potenzial.

Besonders bevorzugt ist das Sensorsystem derart ausgebildet, dass das definierte elektrische Potenzial, mit welchem die Heizstruktur während der Erfassung der Änderung der kapazitiven Kopplung der Sensorstruktur mit der Umgebung und/oder einer Referenzelektrode bzw. einer Referenzelektrode beaufschlagbar ist, einem während der Erfassung der Änderung der kapazitiven Kopplung an der Sensorstruktur anliegenden Potenzial zumindest teilweise nachgeführt ist, insbesondere dem Verlauf des an der Sensorstruktur anliegenden Potenzial folgt. D.h. das Potenzial, mit welchem die Heizstruktur beaufschlagbar ist, ist nicht nur der Änderung der kapazitiven Kopplung nachgeführt, d.h. nimmt zu wenn die Änderung der kapazitiven Kopplung zunimmt bzw. nimmt ab wenn die Änderung der kapazitiven Kopplung abnimmt, sondern folgt insbesondere dem Verlauf des an der Sensorstruktur anliegende Potenzials, d.h. folgt im Wesentlichen dem gleichen Kurvenverlauf. Je besser das elektrische Potenzial mit welchem die Heizstruktur beaufschlagt wird dem an der Sensorstruktur anliegendem Potenzial folgt, desto eine bessere Abschirmwirkung kann erzielt werden.

Besonders bevorzugt kann das Abschirmelement dabei mit dem gleichen elektrischen Potenzial beaufschlagt werden, das an der Sensorstruktur anliegt. Dadurch kann die Grundladung des Sensorsystems in vielen Fällen nahezu auf null reduziert werden, so dass sich eine besonders hohe Auflösung des Sensorsystems erreichen lässt. D.h. dadurch kann erreicht werden, dass eine Annäherung und/oder Entfernung einer menschlichen Hand eine möglichst große Änderung der kapazitiven Kopplung der Sensorstruktur mit der Umgebung und/oder einer Referenzelektrode bewirkt, die messtechnisch sicher erfasst werden kann.

Dies ist besonders vorteilhaft, wenn die wenigstens eine Heizstruktur mit der Sensorstruktur in derselben Ebene angeordnet ist, da auf diese Weise eine weiter verbesserte Entkopplung der Sensoreinrichtung von umgebenden Kapazitäten, wie beispielsweise der Heizeinrichtung selber oder dergleichen erreicht werden kann, so dass eine noch größere Steigerung der Auflösung erzielt werden kann.

Besonders in diesem Fall, d.h. wenn wenigstens eine Heizstruktur ein weiteres Abschirmelement bildet, kann es vorteilhaft sein, wenn die Heizeinrichtung entsprechend der Sensoreinrichtung strukturiert ist.

Es versteht sich von selbst, dass während der Zeit, in der die Heizstruktur als aktives Abschirmelement betrieben werden kann, kein Heizbetrieb dieser Heizstruktur möglich ist.

In einer Weiterbildung der Erfindung weist das Sensorsystem zusätzlich eine Abschirmeinrichtung auf, dem ein funktionsgemäßen Einbauzustand des Sensorsystems in einem Lenkrad mit einem metallischen Lenkradkern eine Abschirmung der kapazitiven Sensoreinrichtung gegenüber dem Lenkradkern bewirkt, wobei die Abschirmeinrichtung dazu vorzugsweise wenigstens ein Abschirmelement aufweist, insbesondere ein flächiges Abschirmelement mit einer Außenseite und einer Innenseite.

Durch die Anordnung einer beschriebenen Abschirmeinrichtung mit einem Abschirmelement zwischen dem metallischen Lenkradkern und der kapazitiven Sensoreinrichtung kann die kapazitive Entkopplung der Sensoreinrichtung vom Lenkradkern und damit eine ausreichende Abschirmung der kapazitiven Sensoreinrichtung gegenüber dem Lenkradkern erreicht werden. Vorteilhaft an dieser Anordnung, bei der die Abschirmeinrichtung bzw. das Abschirmelement, in radialer Richtung betrachtet, auf der Innenseite der Heizeinrichtung angeordnet ist, dass die von der Heizeinrichtung abgegebene Wärme nicht erst das Abschirmelement passieren muss, um den Greifbereich des Lenkrades zu beheizen, wie dies bei einigen aus dem Stand der Technik bekannten Lösungen der Fall ist, so dass eine Verschlechterung des Wirkungsgrades der Heizeinrichtung vermieden werden kann.

Bevorzugt ist das Sensorsystem mit dem Abschirmelement dabei derart in einem Lenkrad anordbar, dass in einem funktionsgemäßen Einbauzustand des Sensorsystems in einem Lenkrad die Innenseite wenigstens eines Abschirmelementes dem Lenkradkern zugewandt ist und diesen teilweise umgreift und die Außenseite der Sensorstruktur zugewandt ist, wobei sich vorzugsweise wenigstens eine Heizstruktur im Bereich der Außenseite des Abschirmelementes befindet. Dadurch kann eine besonders gute Abschirmung und damit eine besonders gute kapazitive Entkopplung von der Sensoreinrichtung vom Lenkradkern erreicht werden. Die kapazitive Entkopplung ist dabei umso besser, je mehr das Abschirmelement den Lenkradkern umgreift.

Das bevorzugt zumindest teilweise flächig ausgebildete Abschirmelement ist dabei vorzugsweise elektrisch leitend, insbesondere metallisch ausgebildet.

Weist die Sensoreinrichtung mehrere Sensorstrukturen und/oder mehrere Heizstrukturen auf, sind in einer bevorzugten Ausgestaltung sämtliche Sensorstrukturen und/oder sämtliche Heizstrukturen auf der Außenseite des Abschirmelementes angeordnet, d.h. in einem funktionsgemäßen Einbauzustand des Sensorsystems in einem Lenkrad auf der dem Greifbereich zugewandten Seite. Besonders bevorzugt sind dabei sämtliche Sensor- und Heizstrukturen auf der Außenseite des Abschirmelementes angeordnet.

In einer bevorzugten Ausgestaltung ist das Abschirmelement einteilig ausgebildet. Selbstverständlich kann das Abschirmelement aber auch mehrteilig ausgebildet sein und beispielsweise entsprechend der Sensoreinrichtung und/oder der Heizeinrichtung strukturiert sein, d.h. unterteilt.

Das Abschirmelement erstreckt sich dabei bevorzugt zumindest teilweise, insbesondere vollständig, sowohl in Umfangsrichtung, d.h. entlang des Lenkradkranzes, als auch in Umfassungsrichtung, d.h. senkrecht dazu in Gegenrichtung, um den Lenkradkern herum. Je besser das Abschirmelement dabei in einem funktionsgemäßen Einbauzustand des Sensorsystems in einem Lenkrad die Sensoreinrichtung von dem Lenkradkern abschirmt bzw. kapazitiv entkoppelt, desto besser kann eine störende kapazitive Kopplung der Sensoreinrichtung mit dem Lenkradkern vermieden werden und somit infolgedessen die Kennungsgenauigkeit bzw. die Sensorempfindlichkeit erhöht werden.

Bevorzugt ist das Sensorsystem auch zur Ansteuerung der Abschirmeinrichtung ausgebildet, wobei das Sensorsystem vorzugsweise derart ausgebildet ist, dass die Sensoreinrichtung und die Abschirmeinrichtung aufeinander abgestimmt ansteuerbar sind, insbesondere zeitlich aufeinander abgestimmt.

In einer bevorzugten Ausgestaltung ist das Abschirmelement der Abschirmeinrichtung dabei während der Erfassung einer Änderung der kapazitiven Kopplung der Sensorstruktur mit der Umgebung und/oder einer Referenzelektrode derart mit einem definierten elektrischen Potenzial beaufschlagbar, dass in einem funktionsgemäßen Einbauzustand des Sensorsystems in einem Lenkrad mit einem metallischen Lenkradkern die kapazitive Kopplung zwischen dem Lenkradkern und der Sensoreinrichtung noch weiter reduziert werden kann gegenüber einem Sensorsystem mit einem nicht mit einem elektrischen Potenzial beaufschlagten Abschirmelement.

D.h. bevorzugt ist das Abschirmelement als aktives Abschirmelement schaltbar, d.h. als sogenannter "Guard" bzw. als Schirmungselektrode betreibar. Sind mehrere Abschirmelemente vorhanden, sind vorzugsweise mehrere Abschirmelemente entsprechend elektrisch leitfähig und mit einem elektrischen Potenzial beaufschlagbar, insbesondere alle Abschirmelemente.

Durch das Beaufschlagen des Abschirmelementes mit einem definierten elektrischen Potenzial kann in den meisten Anwendungsfällen, ähnlich wie durch das Beaufschlagen wenigstens einer Heizstruktur mit einem definierten elektrischen Potenzial, das sich zwischen der Sensorstruktur und der Umgebung und/oder einer Referenzelektrode bildende elektrische Feld positiv beeinflusst werden, insbesondere derart, dass eine Grundladung der Sensoreinrichtung verringert wird, so dass eine Anwesenheit einer menschlichen Hand im Detektionsbereich der Sensorstruktur insbesondere einer Annäherung und/oder Entfernung einer menschlichen Hand, eine größere Änderung der kapazitiven Kopplung mit der Sensorstruktur bewirkt. D.h. mit anderen Worten kann durch die Verwendung eines aktiven Abschirmelementes die Auflösung des Sensorsystems verbessert werden, insbesondere das Signal- zu- Rausch-Verhältnis (SNR=Signal To Noise Ratio) und damit die Erkennungsqualität erheblich gesteigert werden.

Besonders bevorzugt ist das Sensorsystem dabei derart ausgebildet, dass das Abschirmelement in Abhängigkeit eines Zustands der Sensoreinrichtung, insbesondere abhängig von der Sensorstruktur, mit einem elektrischen Potenzial beaufschlagt werden kann.

Besonders bevorzugt ist das Sensorsystem dabei derart ausgebildet, dass das definierte elektrische Potenzial, mit welchem das Abschirmelement während der Erfassung einer Änderung der kapazitiven Kopplung der Sensorstruktur mit der Umgebung bzw. der Referenzelektrode beaufschlagbar ist, einem während der Erfassung der Änderung der kapazitiven Kopplung an der Sensorstruktur anliegenden Potenzial zumindest teilweise nachgeführt ist, insbesondere dem Verlauf des an der Sensorstruktur anliegenden Potenzials folgt.

Als besonders vorteilhaft hat es sich dabei herausgestellt, wenn das Abschirmelement dabei mit dem gleichen elektrischen Potenzial beaufschlagt werden kann, das an der Sensorstruktur anliegt. Ist das Potenzial, das an der Sensorstruktur dabei anliegt, veränderlich, ist es vorteilhaft wenn das Potenzial mit dem das Abschirmelement beaufschlagt wird, sich in gleichem Maße verändert, d.h. dem Potenzial an der Sensorstruktur folgt. Dadurch kann die Grundkapazität des Sensorsystems nahezu auf null reduziert werden, so dass sich eine besonders hohe Auflösung des Sensorsystems erreichen lässt. D.h. dadurch kann erreicht werden, dass eine Annäherung und/oder Entfernung einer menschlichen Hand eine möglichst große Änderung der kapazitiven Kopplung der Sensorstruktur mit der Umgebung bzw. der Referenzelektrode bewirkt, die messtechnisch sicher erfasst werden kann.

Alternativ oder zusätzlich ist das Sensorsystem mit dem metallischen Lenkradkern eines Lenkrads koppelbar, insbesondere derart, dass in einem funktionsgemäßen Einbauzustand des Sensorsystems in einem Lenkrad mit metallischem Lenkradkern der Lenkradkern während der Erfassung der Änderung der kapazitiven Kopplung der Sensorstruktur mit der Umgebung bzw. der Referenzelektrode derart mit einem definierten elektrischen Potenzial beaufschlagt werden kann, dass während der Erfassung der Änderung der kapazitiven Kopplung der Sensorstruktur mit der Umgebung bzw. der Referenzelektrode die kapazitive Kopplung zwischen dem Lenkradkern und der Sensoreinrichtung reduziert wird. D.h. bevorzugt wird der metallische Lenkradkern dabei ebenfalls als aktives Abschirmelement betrieben, um quasi eine "Abschirmung vor sich selbst" zu bewirken.

Bevorzugt kann das definierte elektrische Potenzial, mit welchem der Lenkradkern in diesem Fall während der Erfassung der Änderung der kapazitiven Kopplung der Sensorstruktur mit der Umgebung bzw. der Referenzelektrode beaufschlagt wird, dem an der Sensorstruktur anliegenden Potenzial zumindest teilweise nachgeführt werden, insbesondere dem Verlauf des an der Sensorstruktur anliegenden Potenzials folgen.

Ein erfindungsgemäßes Lenkrad mit einem Sensorsystem mit einer kapazitiven Sensoreinrichtung, wobei das Sensorsystem insbesondere zu Hands-On-Off-Erkennung ausgebildet ist, ist dadurch gekennzeichnet, dass es ein erfindungsgemäßes Sensorsystem aufweist.

Ein erfindungsgemäßes Verfahren zum Betrieb eines Sensorsystems mit wenigstens einer kapazitiven Sensoreinrichtung, wenigstens einer Heizeinrichtung und mit wenigstens einer Steuereinrichtung, wobei die kapazitive Sensoreinrichtung wenigstens eine elektrisch leitfähige Sensorstruktur aufweist und zur Erkennung einer Anwesenheit einer menschlichen Hand in einem Greifbereich eines Lenkrads ausgebildet ist, wobei das Sensorsystem derart ausgebildet ist, dass die Anwesenheit einer menschlichen Hand in einem Detektionsbereich der Sensorstruktur jeweils eine erfassbare, der Sensorstruktur zugeordnete Änderung einer kapazitiven Kopplung der Sensorstruktur mit der Umgebung und/oder einer Referenzelektrode gegenüber einem Referenzzustand ohne Anwesenheit einer Hand im Detektionsbereich bewirkt, wobei die Heizeinrichtung wenigstens eine elektrisch leitfähige Heizstruktur zur Heizung des Lenkrades aufweist, und wobei die Steuereinrichtung zur Ansteuerung der Sensoreinrichtung und/oder zur Ansteuerung der Heizeinrichtung ausgebildet ist, wobei ein Zustand der Sensoreinrichtung erfasst wird und ein Zustand der Heizeinrichtung und die Sensoreinrichtung und die Heizeinrichtung in Abhängigkeit ihrer erfassten Zustände aufeinander abgestimmt angesteuert werden, insbesondere zeitlich aufeinander abgestimmt, ist dadurch gekennzeichnet, dass die Sensoreinrichtung und die Heizeinrichtung derart aufeinander abgestimmt angesteuert werden, dass eine störende kapazitive Kopplung der Sensoreinrichtung mit Komponenten des Sensorsystems und/oder mit einem funktionsgemäßen Einbauzustand des Sensorsystems in einem Lenkrad mit Komponenten des Lenkrads während der Erfassung einer Änderung der kapazitiven Kopplung der Sensorstruktur mit der Umgebung und/oder der Referenzelektrode reduziert wird.

Um die Änderung der kapazitiven Kopplung der Sensorstruktur mit der Umgebung und/oder einer Referenzelektrode zu erfassen, können jeweils mehrere Abtastungen durchgeführt, insbesondere wenigstens zwei, wobei jeweils die erfassten Werte miteinander verglichen werden.

Bevorzugt werden die Sensoreinrichtung und die Heizeinrichtung dabei derart aufeinander abgestimmt, insbesondere entsprechend zeitlich aufeinander abgestimmt, dass eine störende kapazitive Kopplung der Sensoreinrichtung mit Komponenten des Sensorsystems und/oder mit einem funktionsgemäßen Einbauzustand des Sensorsystems in einem Lenkrad mit Komponenten des Lenkrads sogar ganz vermieden wird.

Das Verfahren eignet sich insbesondere zum Betrieb von Sensorsystemen, die zur Hands-On-Off-Erkennung ausgebildet sind, also zum Erkennen, ob sich die Hand oder ein Teil der Hand eines Fahrers am Lenkrad befindet.

Bevorzugt werden die Sensoreinrichtung und die Heizeinrichtung dabei derart aufeinander abgestimmt angesteuert, dass eine störende kapazitive Kopplung der Sensoreinrichtung mit der Heizeinrichtung während der Erfassung eine Änderung der kapazitiven Kopplung der Sensorstruktur mit der Umgebung bzw. der Referenzelektrode reduziert wird. Bei entsprechender Ansteuerung der Sensoreinrichtung und der Heizeinrichtung kann dabei in einigen Fällen eine störende kapazitive Kopplung der Sensoreinrichtung mit der Heizeinrichtung sogar ganz vermieden werden.

Um dies zu erreichen wird während der Erfassung einer Anderung der kapazitiven Kopplung der Sensorstruktur mit der Umgebung bzw. der Referenzelektrode wenigstens eine Heizstruktur allpolig abgeschaltet, vorzugsweise sämtliche Heizstrukturen welche eine störende kapazitive Kopplung mit der Sensorstruktur bewirken. Dabei wird insbesondere wenigstens eine Heizstruktur allpolig abgeschaltet, wenn die Heizstruktur zumindest teilweise eine Sensorstruktur bildet.

Um eine störende kapazitive Kopplung der Heizstruktur mit der Sensorstruktur zu verringern bzw. sogar zu vermeiden, hat es sich als vorteilhaft erwiesen, während der Erfassung der Änderung der kapazitiven Kopplung der Sensorstruktur mit der Umgebung bzw. der Referenzelektrode die Heizleistung wenigstens einer Heizstruktur konstant zu halten.

Erfolgt die Ansteuerung der Heizstruktur mittels eines Pulsweitenmodulations-Signals, werden bevorzugt die Heizeinrichtung und die Sensoreinrichtung derart aufeinander abgestimmt, dass die Erfassung der Änderung der kapazitiven Kopplung der Sensorstruktur mit der Umgebung bzw. der Referenzelektrode erfolgt, während ein Pulsweitenmodulations-Signal konstant ist. D.h. bevorzugt erfolgt die Erfassung der Änderung der kapazitiven Kopplung der Sensorstruktur mit der Umgebung bzw. der Referenzelektrode während eines Rechteckpulses oder zwischen zwei Rechteckpulsen, nicht jedoch auf einer Flanke, weder auf der steigenden noch auf der fallenden Flanke, des Pulsweitenmodulations-Signals.

In einer bevorzugten Ausführungsform werden die Sensoreinrichtung und die Heizeinrichtung derart aufeinander abgestimmt angesteuert, dass eine störende kapazitive Kopplung der Sensoreinrichtung mit dem Lenkradkern in einem funktionsgemäßen Einbauzustand der Sensoreinrichtung in einem Lenkrad während der Erfassung der Änderung der kapazitiven Kopplung der Sensorstruktur mit der Umgebung bzw. der Referenzelektrode reduziert wird, insbesondere vermieden wird.

Um dies zu erreichen wird besonders bevorzugt eine, von der Sensorstruktur verschiedene Heizstruktur derart mit einem definierten elektrischen Potenzial beaufschlagt, dass die Heizstruktur in einem funktionsgemäßen Einbauzustand des Sensorsystems in einem Lenkrad als Abschirmelement gegenüber dem metallischen Lenkradkern wirkt und infolgedessen die störende kapazitive Kopplung zwischen dem Lenkradkern und der Sensoreinrichtung reduziert bzw. sogar vermieden wird.

Bevorzugt wird dabei das definierte elektrische Potenzial, mit welchem die Heizstruktur während der Erfassung der Änderung der kapazitiven Kopplung der Sensorstruktur mit der Umgebung bzw. der Referenzelektrode beaufschlagt wird, einem während der Erfassung der Änderung der kapazitiven Kopplung an der Sensorstruktur anliegenden Potenzial zumindest teilweise nachgeführt ist, insbesondere dem Verlauf des an der Sensorstruktur anliegenden Potenzial zu folgen.

Als besonders vorteilhaft hat es sich dabei herausgestellt, wenn die Heizeinrichtung dabei mit dem gleichen elektrischen Potenzial beaufschlagt wird, das an der Sensorstruktur anliegt.

Weist das Sensorsystem zusätzlich eine Abschirmeinrichtung auf, die in einem funktionsgemäßen Einbauzustand des Sensorsystems in einem Lenkrad mit einem metallischen Lenkradkern eine Abschirmung der kapazitiven Sensoreinrichtung gegenüber dem Lenkradkern bewirkt, wobei die Abschirmeinrichtung dazu vorzugsweise wenigstens ein elektrisch leitfähiges von der Steuereinrichtung ansteuerbares und mit einem definierten elektrischen Potenzial beaufschlagbares Abschirmelement aufweist, insbesondere ein flächiges Abschirmelement mit einer Außenseite und einer Innenseite, werden die Sensoreinrichtung und die Abschirmeinrichtung bevorzugt aufeinander abgestimmt angesteuert, insbesondere zeitlich aufeinander abgestimmt.

Dabei wird besonders bevorzugt das Abschirmelement der Abschirmeinrichtung während der Erfassung der Änderung der kapazitiven Kopplung der Sensorstruktur mit der Umgebung bzw. der Referenzelektrode derart mit einem definierten elektrischen Potenzial beaufschlagt, dass in einem funktionsgemäßen Einbauzustand des Sensorsystems in einem Lenkrad mit einem metallischen Lenkradkern die kapazitive Kopplung zwischen dem Lenkradkern und die Sensoreinrichtung reduziert wird.

Besonders bevorzugt wird dabei das definierte elektrische Potenzial, mit welchem das Abschirmelement während der Erfassung der Änderung der kapazitiven Kopplung der Sensorstruktur mit der Umgebung bzw. der Referenzelektrode beaufschlagt wird, einem während der Erfassung der Änderung der kapazitiven Kopplung an der Sensorstruktur anliegenden Potenzial zumindest teilweise nachgeführt, insbesondere folgt es dem Verlauf des an der Sensorstruktur anliegenden Potenzials.

Alternativ oder zusätzlich wird bei einer bevorzugten Ausführungsform des Verfahrens des erfindungsgemäßen Verfahrens in einem funktionsgemäßen Einbauzustand des Sensorsystems in einem Lenkrad mit einem metallischen Lenkradkern während der Erfassung der Änderung der kapazitiven Kopplung der Sensorstruktur mit der Umgebung der Lenkradkern mit einem definierten elektrischen Potenzial beaufschlagt. Und zwar derart, dass während der Erfassung der Änderung der kapazitiven Kopplung der Sensorstruktur mit der Umgebung die kapazitive Kopplung zwischen dem Lenkradkern und der Sensoreinrichtung reduziert wird.

Dazu wird besonders bevorzugt das elektrische Potenzial, mit welchem der Lenkradkern während der Erfassung einer Änderung der kapazitiven Kopplung der Sensorstruktur mit der Umgebung beaufschlagt wird, einem während der Erfassung der Änderung der kapazitiven Kopplung an der Sensorstruktur anliegenden Potenzial zumindest teilweise nachgeführt, insbesondere folgt das Potenzial dem Verlauf des an der Sensorstruktur anliegenden Potenzials.

Die mit Bezug auf das Sensorsystem beschriebenen bevorzugten Ausgestaltung und deren Vorteile gelten selbstverständlich entsprechend für das erfindungsgemäße Lenkrad sowie für das erfindungsgemäße Verfahren und umgekehrt.

Weitere Merkmale der Erfindung ergeben sich aus den Figuren und der Figurenbeschreibung. Alle vorstehend in der Beschreibung im Zusammenhang mit dem Sensorsystem, dem Lenkrad oder dem Verfahren genannten Merkmale und Merkmalskombinationen sowie die nachfolgend in der Figurenbeschreibung genannten und/oder in den Figuren alleine gezeigten Merkmale und Merkmalskombinationen gelten jeweils nicht nur für das Sensorsystem sondern jeweils auch für das Lenkrad sowie für das beschriebene Verfahren und sind jeweils nicht nur in den jeweils beschriebenen Kombinationen, sondern auch in anderen technisch ausführbaren Kombinationen bzw. in Alleinstellung verwendbar.

Die Erfindung wird nun anhand mehrerer bevorzugter Ausführungsbeispiele sowie unter Bezugnahme auf die beigefügten Zeichnungen näher erläutert.

Es zeigen schematisch:
- Fig. 1: ein erstes Ausführungsbeispiel eines erfindungsgemäßen Lenkrads in Frontansicht,
- Fig. 2: das erfindungsgemäße Lenkrad aus Fig.1 mit einem erfindungsgemäßen Sensorsystem in Schnittdarstellung in Dickenrichtung,
- Fig. 3: einen Ausschnitt des erfindungsgemäßen Lenkrads aus Fig. 1 in Seitenansicht,
- Fig. 4: eine schematische Darstellung der zeitlichen Synchronisation der Sensoreinrichtung mit der Heizeinrichtung,
- Fig. 5: ein alternatives Ausführungsbeispiel eines erfindungsgemäßen Lenkrads mit einem alternativen, erfindungsgemäßen Sensorsystems in Schnittdarstellung in Dickenrichtung,
- Fig. 6a: die Sensor- und Heizstruktur des zweiten Ausführungsbeispiels eines erfindungsgemäßen Lenkrads aus den Fig. 5 in abgewickelter Darstellung,
- Fig. 6b: ein alternatives Ausführungsbeispiel für die Ausgestaltung der Sensor- und Heizstrukturen einer kapazitiven Sensoreinrichtung für ein erfindungsgemäßes Sensorsystem, ebenfalls in abgewickelter Darstellung,
- Fig. 7: ein weiteres, alternatives Ausführungsbeispiel für die Ausgestaltung der Sensor- und Heizstrukturen einer kapazitiven Sensoreinrichtung für ein erfindungsgemäßes Sensorsystem, ebenfalls in abgewickelter Darstellung,
- Fig. 8: ein weiteres, alternatives Ausführungsbeispiel für die Ausgestaltung der Sensor- und Heizstrukturen einer kapazitiven Sensoreinrichtung für ein erfindungsgemäßes Sensorsystem, ebenfalls in abgewickelter Darstellung,
- Fig. 9: ein weiteres, alternatives Ausführungsbeispiel für die Ausgestaltung der Sensor- und Heizstrukturen mit überschneidend angeordneten Sensorstrukturen einer kapazitiven Sensoreinrichtung für ein erfindungsgemäßes Sensorsystem, ebenfalls in abgewickelter Darstellung,
- Fig. 10: ein weiteres, alternatives Ausführungsbeispiel für die Ausgestaltung der Sensor- und Heizstrukturen mit überschneidend angeordneten Sensorstrukturen einer kapazitiven Sensoreinrichtung für ein erfindungsgemäßes Sensorsystem, ebenfalls in abgewickelter Darstellung,
- Fig. 11: noch ein weiteres, alternatives Ausführungsbeispiel für die Ausgestaltung der Sensor- und Heizstrukturen einer kapazitiven Sensoreinrichtung für ein erfindungsgemäßes Sensorsystem, ebenfalls in abgewickelter Darstellung,
- Fig. 12: einen Ausschnitt eines schematischen Blockschaltbildes zur Steuerung der kapazitiven Sensoreinrichtung und der Heizstruktur des erfindungsgemäßen Sensorsystems aus Fig. 2 mit einer von der Heizstruktur separaten Sensorstruktur,
- Fig. 13: einen Ausschnitt eines schematischen Blockschaltbildes zu dem in Fig. 5 gezeigten Ausführungsbeispiel eines erfindungsgemäßen Sensorsystems mit einer durch die Heizstruktur gebildeten Sensoreinrichtung,
- Fig. 14: einen Ausschnitt eines Blockschaltbildes eines weiteren Ausführungsbeispiels eines erfindungsgemäßen Sensorsystems mit einer von der Heizstruktur separaten Sensorstruktur, bei welchem die Heizstruktur als aktives Abschirmelement betrieben werden kann,
- Fig. 15: schematisch den Verlauf des an der Sensorstruktur anliegenden elektrischen Potenzials während der Erfassung einer Änderung der kapazitiven Kopplung der Sensorstruktur mit der Umgebung bzw. einer Referenzelektrode,
- Fig. 16a: schematisch den Verlauf eines nachgeführten elektrischen Potenzials eines aktiven Abschirmelementes und
- Fig. 16b: den Verlauf eines elektrischen Potenzials eines aktiven Abschirmelementes, der dem Verlauf des an der Sensorstruktur anliegenden elektrischen Potenzial folgt.

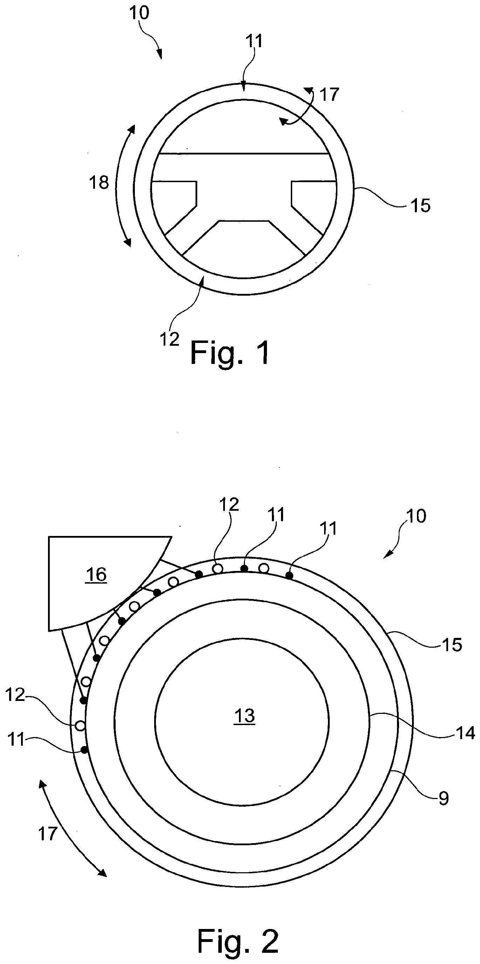

Fig. 1 zeigt ein erstes Ausführungsbeispiel eines erfindungsgemäßen Lenkrads 10 mit einem erfindungsgemäßen Sensorsystem in Frontansicht, wobei das Lenkrad 10 eine unterhalb eines Lenkradbezugs 15 angeordnete kapazitive Sensoreinrichtung mit einer Sensorstruktur 11 sowie eine Heizeinrichtung mit einer Heizstruktur 12 aufweist, die in dieser Darstellung allerdings jeweils nur durch einen Bezugspfeil schematisch angedeutet sind. Bei diesem Ausführungsbeispiel erstrecken sich die Sensorstruktur 11 und die Heizstruktur 12 dabei sowohl vollständig umlaufend in Umfassungsrichtung 17, als auch vollständig umlaufend in Umfangsrichtung 18. D.h. die Sensorstruktur 11 und die Heizstruktur 12 erstrecken sich nahezu über einen gesamten Greifbereich der Lenkradfläche.

Fig. 2 zeigt das erfindungsgemäße Lenkrad 10 aus Fig. 1 in einem Schnitt in Dickenrichtung, wobei in dieser Darstellung der Schichtaufbau des Lenkrads 10 gut zu erkennen ist.

Ein im Kernbereich eines Lenkradquerschnittes angeordneter metallischer Lenkradkern 13 bildet die Tragstruktur des Lenkrads 10. In radialer Richtung außerhalb vom Lenkradkern 13, d.h. im Bereich der Außenseite des Lenkradkerns 13, ist ein flächig ausgebildetes und bei diesem Ausführungsbeispiel vollständig umlaufendes Abschirmelement 14 angeordnet, welches den Lenkradkern vollständig umschließt.

Außerhalb vom Abschirmelement 14 und unmittelbar unter dem Lenkradbezug 15 sind die Sensorstruktur 11 und die Heizstruktur 12 angeordnet, wobei die Anordnung der Heizstruktur 12 im Bereich der Außenseite des Abschirmelementes 14 ist dabei insbesondere in Bezug auf den Wirkungsgrad der Heizeinrichtung bzw. der Heizstruktur 12 vorteilhaft, da die abgegebene Heizwärme nicht erst das Abschirmelement passieren muss, bevor sie in den Greifbereich des Lenkrads 10 gelangt.

Die Sensorstruktur 11 und die Heizstruktur 12 sind auf einem Träger 9 aus einem dünnen Stoff aufgestickt und Teil eines erfindungsgemäßen Sensorsystems mit einer kapazitiven Sensoreinrichtung, das zur Erkennung einer Anwesenheit einer menschlichen Hand bzw. eines Fingers 16 im Detektionsbereich der elektrisch leitfähigen Sensorstruktur 11 ausgebildet ist. Das Sensorsystem ist dabei insbesondere zur Erkennung einer Annäherung und/oder Entfernung einer menschlichen Hand bzw. eines Fingers 16 an das Lenkrad 10 ausgebildet, insbesondere zur Hands-On-Off-Erkennung, d.h. zum Erkennen, ob eine menschliche Hand oder ein Teil einer Hand am Lenkrad 10 anliegt oder nicht.

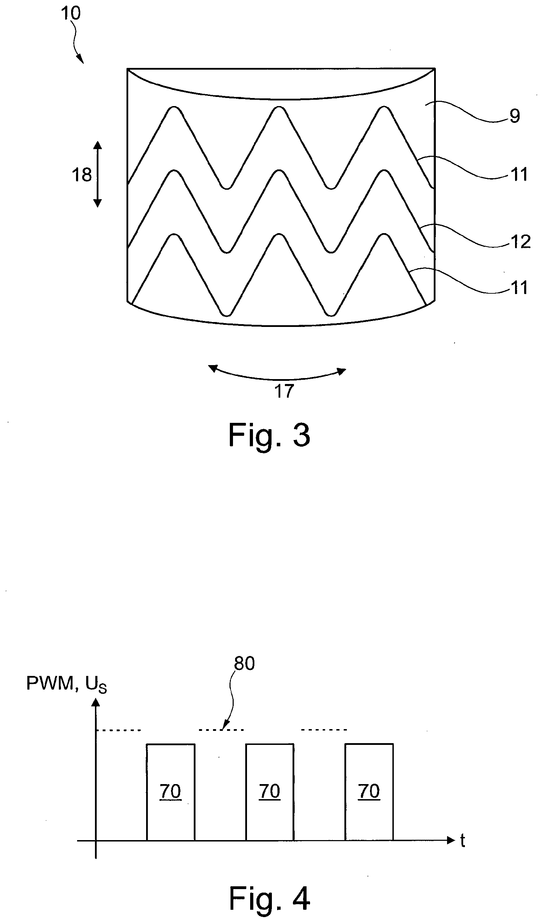

Bei diesem Ausführungsbeispiel werden die Sensorstruktur 11 und die Heizstruktur 12 jeweils durch unterschiedliche, elektrische Leiter in Form von einzelnen Widerstandsdrähten gebildet, welche mäanderförmig auf dem Träger 9 um einen gesamten Umfang in Dickenrichtung, d.h. in Umfassungsrichtung 17 herum verlaufen und in Umfangsrichtung 18 über den gesamten Lenkradumfang verteilt gleichmäßig beabstandet zueinander angeordnet sind, siehe Fig. 3.

Das Erkennen einer Annäherung und/oder einer Entfernung einer menschlichen Hand 16 mittels der kapazitiven Sensoreinrichtung erfolgt dabei nach dem sogenannten "kapazitiven Prinzip", welches darauf beruht, dass die Anwesenheit einer menschlichen Hand im Detektionsbereich der Sensorstruktur 11 bzw. die Annäherung und/oder Entfernung einer menschlichen Hand und/oder eines anderen menschlichen Körperteils an die Sensorstruktur 11 bzw. von dieser weg, eine Änderung der kapazitiven Kopplung der Sensorstruktur 11, in diesem Fall mit der Umgebung, bewirkt, die messtechnisch erfasst werden kann. Aus der erfassten Änderung der kapazitiven Kopplung der Sensorstruktur 11 mit der Umgebung, kann dann auf die Anwesenheit einer menschlichen Hand oder eines Fingers 16 bzw. eine Annäherung und/oder Entfernung einer Hand rückgeschlossen werden.

Das erfindungsgemäße Sensorsystem ist erfindungsgemäß dabei dazu ausgebildet, die Sensoreinrichtung und die Heizeinrichtung derart aufeinander abgestimmt anzusteuern, dass eine störende kapazitive Kopplung der Sensoreinrichtung mit Komponenten des Sensorsystems bzw. mit Komponenten des Lenkrads, in diesem Fall mit der Heizeinrichtung, reduziert werden kann bzw. sogar vermieden werden kann.

Bei dem vorbeschriebenen erfindungsgemäßen Sensorsystem bzw. dem Sensorsystem des erfindungsgemäßen Lenkrads 10 wird die Heizstruktur 12 mittels einer Pulsweitenmodulation (PWM) mit einem PWM-Signal in Form von Rechteckpulsen 70 angesteuert werden, wobei gemäß der Darstellung in Fig. 4, die Erfassung der Änderung der kapazitiven Kopplung der Sensorstruktur mit der Umgebung, symbolisiert durch ein Signal 80, erfolgt, während eine Heizleistung der Heizstruktur 12, symbolisiert durch das Signal 70, konstant ist. Insbesondere erfolgt die Erfassung der Änderung der kapazitiven Kopplung der Sensorstruktur mit der Umgebung dabei zwischen zwei Rechteckpulsen, d.h. nicht auf einer Flanke, weder auf der steigenden Flanke, noch auf der fallenden Flanke. Dadurch kann auf einfache Art und Weise die störende kapazitive Kopplung der Sensorstruktur mit der Heizeinrichtung reduziert bzw. in einigen Anwendungsfällen sogar vermieden werden, sogar ohne, dass die Heizeinrichtung abgeschaltet werden muss.

In einer alternativen Ausgestaltung bzw. in einem alternativen Verfahren zum Betrieb eines erfindungsgemäßen Sensorsystems kann die Heizeinrichtung, insbesondere die Heizstruktur 12 während der Erfassung einer Annäherung und/oder Erkennung einer menschlichen Hand während der Erfassung der Änderung der kapazitiven Kopplung der Sensorstruktur mit der Umgebung abgeschaltet werden. Dabei wird bevorzugt auf die bereits zur Regelung einer Lenkradheizungstemperatur vorliegende Abschaltfunktion zurückgegriffen.

Besonders bevorzugt ist das Sensorsystem jedoch derart ausgebildet, dass alternativ oder auch zusätzlich bei Bedarf, die Heizstruktur 12 als ein aktives Abschirmelement zu betreiben, d.h. mit einem definierten elektrischen Potenzial zu beaufschlagen, um die Abschirmung der Sensorstruktur 11 gegen störende kapazitive Kopplungen zu verbessern und um insbesondere eine störende kapazitive Kopplung mit dem metallischen Lenkradkern 13 zu vermeiden. Vorzugsweise kann die Heizstruktur 12 dabei mit dem gleichen Potenzial beaufschlagt werden, das an der Sensorstruktur 11 anliegt.

Dies hat sich als besonders vorteilhaft herausgestellt, da in einigen Anwendungsfällen somit auf ein zusätzliches Abschirmelement 14, welches eine Abschirmung der Sensorstruktur 11 von dem metallischen Lenkradkern 13 bewirkt, insbesondere die kapazitive Entkopplung von Sensorstruktur 11 und Lenkradkern 13, verzichtet werden kann, wodurch das Gewicht des Lenkrads reduziert werden kann.

In einigen Anwendungsfällen kann es aber auch vorteilhaft sein, das Abschirmelement 14 alternativ und/oder zusätzlich zur Heizstruktur 12 als aktives Abschirmelement zu betreiben und mit einem definierten elektrischen Potenzial zu beaufschlagen.

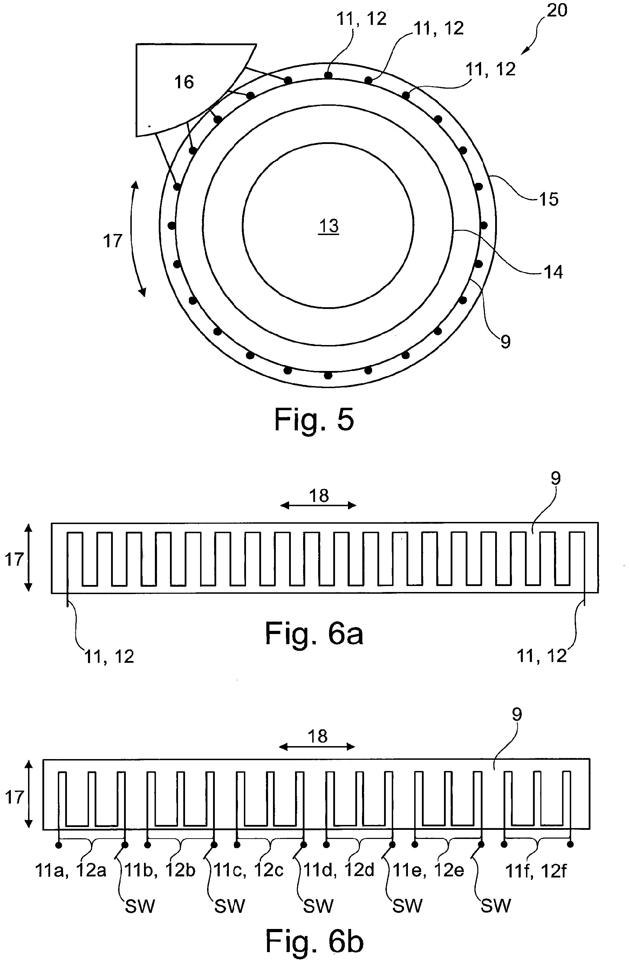

Im Gegensatz zu dem zuvor beschriebenen, erfindungsgemäßen Lenkrad 10 zeigt Fig. 5 ein zweites Ausführungsbeispiel eines erfindungsgemäßen Lenkrads 20, bei dem die Sensorstruktur 11 nicht von der Heizstruktur 12 verschieden ist, sondern durch diese gebildet ist, wobei auch in diesem Fall die Heizstruktur 12 und die durch diese gebildete Sensorstruktur 11 auf einem Träger 9 aus einem dünnen Stoff aufgestickt sind und erfindungsgemäß derart aufeinander abgestimmt angesteuert werden können, dass eine störende kapazitive Kopplung der Sensoreinrichtung mit Komponenten des Sensorsystems bzw. des Lenkrads 10 während der Erfassung der Änderung der kapazitiven Kopplung der Sensorstruktur 11 mit der Umgebung reduziert wird.

In diesem Fall, in dem die Heizstruktur 12 die Sensorstruktur 11 bildet, kann die Heizstruktur 12 während der Erfassung der Änderung der kapazitiven Kopplung der Sensorstruktur 11 mit der Umgebung zum Erkennen einer Annäherung und/oder Entfernung einer menschlichen Hand allpolig abgeschaltet werden, d.h. vollständig vom Plus- und Minuspol getrennt werden, so dass eine störende kapazitive Kopplung der Sensorstruktur mit der Heizstruktur vermieden werden kann. Dabei kann auf die bereits zur Regelung einer Lenkradheizungstemperatur vorliegende Abschaltfunktion zurückgegriffen werden.

Die Sensorstruktur 11 und die Heizstruktur 12 können dabei auf unterschiedliche Arten und Weisen angeordnet sein. Ein erfindungsgemäßes Sensorsystem kann auch mehrere Sensorstrukturen 11 und mehrere Heizstrukturen 12 aufweisen.

Fig. 6a zeigt beispielhaft die Anordnung der Sensorstruktur 11 auf dem Träger 9 in abgewickelter Darstellung des zweiten Ausführungsbeispiels eines erfindungsgemäßen Lenkrads 20 aus Fig. 5. In dieser Darstellung ist insbesondere die drahtförmige Ausgestaltung der Sensor- und Heizstruktur 11 bzw. 12 sowie deren mäanderförmige Anordnung auf dem Trägerstoff 9 gut erkennbar.

Fig. 6b zeigt, ebenfalls in abgewickelter Darstellung, ein alternatives Ausführungsbeispiel für die Ausgestaltung der Sensor- und Heizstrukturen 11 bzw. 12 einer kapazitiven Sensoreinrichtung für ein erfindungsgemäßes Sensorsystem, wobei bei diesem Ausführungsbeispiel auf dem Träger 9 insgesamt sechs, mäanderförmig verlaufende, in Umfangsrichtung 18 abschnittsweise nebeneinander angeordnete und nahezu gleichmäßig verteilte Sensorstrukturen 11a bis 11f aufgestickt sind, welche jeweils durch eine Heizstruktur 12a bis 12f in Form eines elektrisch leitfähigen Widerstanddrahts gebildet werden. Die einzelnen Sensorstrukturen 11a bis 11f bilden dabei jeweils einzelne Messkapazitäten deren kapazitive Kopplungen separat erfasst werden können. Dadurch kann eine Handposition bzw. die Annäherung und/oder Entfernung einer menschlichen Hand bzw. eines Fingers 16 in Umfangsrichtung 18 sektorweise bzw. abschnittsweise detektiert werden.

Zum Betrieb eines erfindungsgemäßen Sensorsystems mit einer derartigen Sensoreinrichtung, bei welcher die Heizstruktur 12 die Sensorstruktur bildet, ist es, wie vorbeschrieben, erforderlich, während der Messung bzw. der Erfassung einer Kapazitätsänderung die Heizeinrichtung allpolig abzuschalten. Um den Aufwand für die Ansteuerung der Heizeinrichtung möglichst gering zu halten, insbesondere um nicht jede der Heizstrukturen 12a bis 12f einzeln mit dem Energiebordnetz des Kraftfahrzeugs, insbesondere mit der Batterie, koppeln zu müssen und um eine möglichst gleichmäßige Erwärmung des Lenkrads in Umfangsrichtung 18 zu erzielen, sind die einzelnen Heizstrukturen 12a bis 12f jeweils mittels Schaltern SW elektrisch miteinander kontaktierbar, die nur zum Heizen geschlossen werden können, und nur die Heizstrukturen 11a und 12f sind jeweils mit der Bordnetzbatterie gekoppelt.

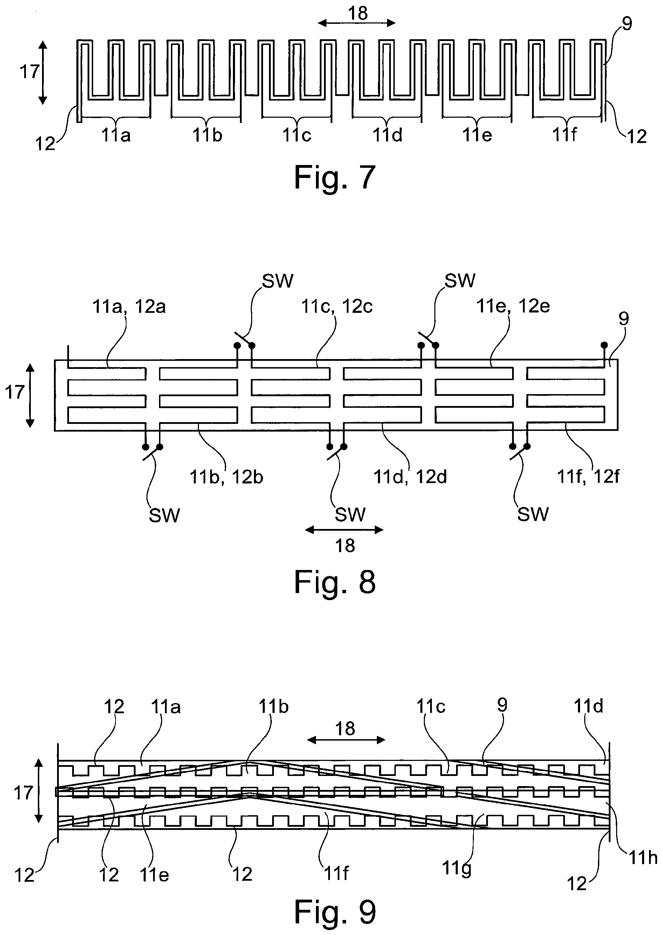

Besonders bevorzugt ist jedoch, wie bei dem in Fig. 7 gezeigten Ausführungsbeispiel, für die kapazitive Sensoreinrichtung ein separater elektrischer Leiter als separate Heizstruktur 12 vorgesehen. Dies hat zum einen den Vorteil, dass die separate Heizstruktur 12 nicht zwingend abgeschaltet werden muss und zum anderen, dass die Heizstruktur 12 auch als ein aktives Abschirmelement betrieben werden kann, als sogenannter "Guard". Dazu wird die Heizstruktur 12 während der Erfassung der Kapazitätsänderung der Sensorstrukturen 11a bis 11f mit einem definierten, elektrischen Potenzial beaufschlagt.

Es versteht sich von selbst, dass während dieser Zeit kein Heizbetrieb möglich ist. Nach Beendigung der Messung bzw. Erfassung der Änderung der kapazitiven Kopplung zur Erkennung einer Annäherung und/oder Entfernung einer menschlichen Hand ist selbstverständlich wieder ein Heizbetrieb möglich. Da es sich bei den für die Messung benötigten Zeitintervallen jeweils nur um kurze Zeitintervalle behandelt, entsteht kein wesentlicher Nachteil in Bezug auf die für einen Fahrer spürbare Heizleistung.

Fig. 8 zeigt ein weiteres, alternatives Ausführungsbeispiel für die Ausgestaltung der Sensor- und Heizstrukturen 11a bis 11f bzw. 12a bis 12f einer kapazitiven Sensoreinrichtung für ein erfindungsgemäßes Sensorsystem, ebenfalls in abgewickelter Darstellung, wobei bei diesem Ausführungsbeispiel Sensor- und Heizstrukturen 11a bis 11f bzw. 12a bis 12f gegenüber dem in Fig. 6b gezeigten Ausführungsbeispiels im Wesentlichen lediglich um 90°verdreht angeordnet s ind.

Fig. 9 zeigt ein weiteres, alternatives Ausführungsbeispiel für die Ausgestaltung von Sensor- und Heizstrukturen 11a bis 11h bzw. 12, ebenfalls in abgewickelter Darstellung, wobei die Sensorstrukturen 11a bis 11h in diesem Fall teilweise kämmend angeordnet sind. Mit einer derartigen Anordnung der Sensorstrukturen 11a bis 11h ist eine ortsaufgelöste Erfassung einer Handpositionen, d.h. eine ortsaufgelöste Erfassung einer Annäherung und oder Entfernung einer menschlichen Hand bzw. eine Fingers 16, in Umfangsrichtung 18 möglich.

Die teilweise kämmend angeordneten Sensorstrukturen 11a bis 11h sind dabei als dreieckförmige Flächen ausgebildet, die jeweils durch elektrisch leitfähige Gewebe gebildet werden, die auf dem Träger 9 aufgebracht und jeweils paarweise kämmend bzw. ineinander verschachtelt zueinander angeordnet sind, so dass bei der Annäherung einer menschlichen Hand an das Lenkrad mindestens die kapazitive Kopplung zweier Sensorstrukturen 11a und 11b bzw. 11b und 11c bzw. 11c und 11d bzw. 11e und 11f bzw. 11f und 11g oder 11g und 11h verändert werden.

Die Auswertung der Änderung der kapazitiven Kopplung der einzelnen Sensorstrukturen 11a bis 11h erlaubt die eindeutige Ermittlung der Position der Annäherung der menschlichen Hand, da jeder Position ein eindeutiges Wertepaar zugeordnet ist bzw. da sich aus jeder Kombination der zugehörigen Sensorstrukturen 11a bis 11h anhand der Verhältnisse der Änderungen der kapazitiven Kopplungen der einzelnen, jeweils reagierenden Sensorstrukturen 11a und 11b bzw. 11b und 11c bzw. 11c und 11d bzw. 11e und 11f bzw. 11f und 11g oder 11g und 11h jeweils eine eindeutige Annäherungsposition bzw. -richtung ermitteln lässt.

Die Heizstruktur 12 wird in diesem Fall durch drei, miteinander elektrisch gekoppelte elektrisch leitende Widerstandsdrähte 12 gebildet, die ebenfalls mäanderförmig auf dem Träger 9 aufgebracht sind. Wie bei dem zuvor anhand von Fig. 7 beschriebenen Ausführungsbeispiel, kann die Heizstruktur 12 währen der Messung allpolig abgeschaltet, d.h. auf "nicht heizend" geschaltet werden, oder als aktives Abschirmelement genutzt werden und mit einem entsprechenden, definierten elektrischen Potenzial beaufschlagt werden.

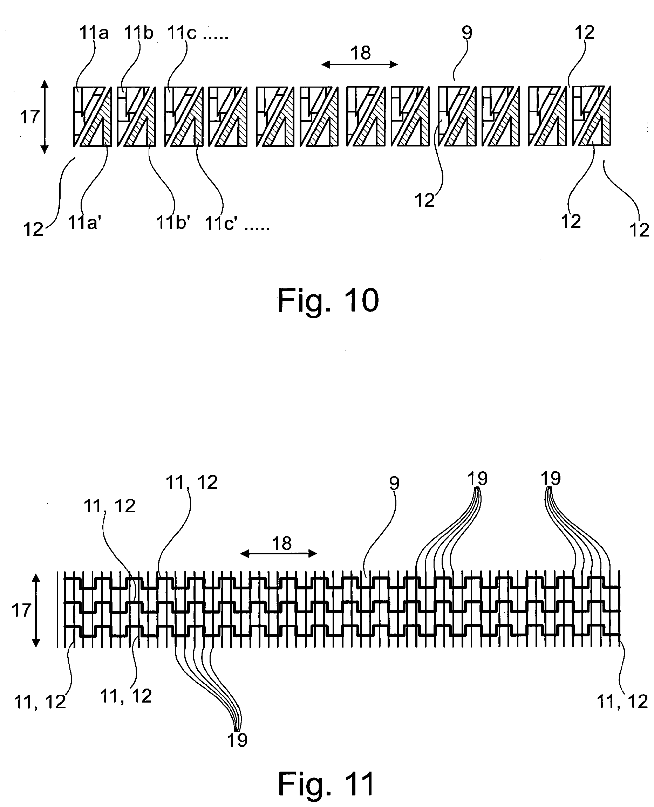

Erfolgt die Verschachtelung bzw. überschneidende Anordnung der Sensorstrukturen 11a, 11b, 11c, ..., wie bei dem in Fig.10 gezeigten Ausführungsbeispiel, welches ebenfalls in abgewickelter Darstellung ein weiteres, alternatives Ausführungsbeispiel für die Ausgestaltung der Sensor- und Heizstrukturen 11a, 11b, 11c, ... bzw. 12 mit überschneidend angeordneten Sensorstrukturen 11a, 11b, 11c, ... einer kapazitiven Sensoreinrichtung für ein erfindungsgemäßes Sensorsystem zeigt, lässt sich ein eine Handposition in Umfassungsrichtung 17 erfassen, vorzugsweise sogar ein Umfassungswinkel bzw. ein sogenannter Umgreifungswinkel, d.h. wie weit das Lenkrad in Dickenrichtung mit einer Hand umfasst wird.

Fig. 11 zeigt, ebenfalls in abgewickelter Darstellung, noch ein weiteres, alternatives Ausführungsbeispiel für die Ausgestaltung der Sensor- und Heizstrukturen 11 bzw. 12 einer kapazitiven Sensoreinrichtung für ein erfindungsgemäßes Sensorsystem, wobei die Sensorstruktur 11, die ebenfalls durch die Heizstruktur 12 gebildet wird, bei diesem Ausführungsbeispiel für eine verbesserte Empfindlichkeit zusätzlich elektrisch leitende, mit der Sensorstruktur 11 bzw. der Heizstruktur 11 verwirkte, aber nicht elektrisch kontaktierte Fäden bzw. Drähte 19 aufweisen, die vorzugsweise relativ zur Sensorstruktur 11 bzw. zur Heizstruktur 12 einen größeren Leitungswiderstand aufweisen.

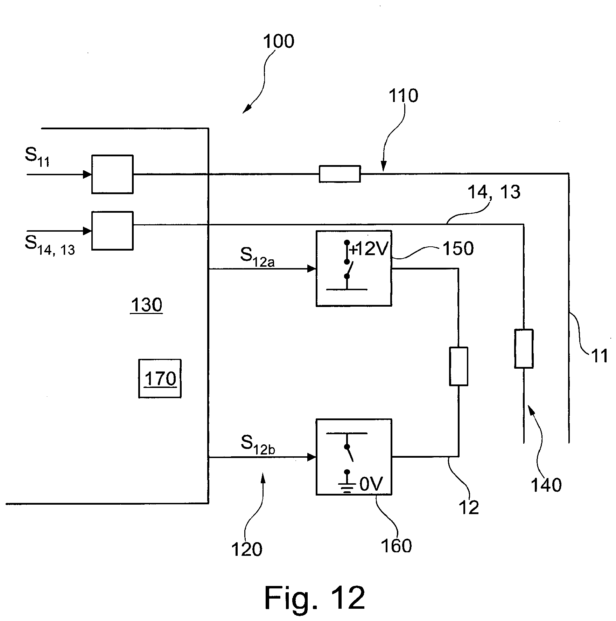

Fig. 12 zeigt einen Ausschnitt eines schematischen Blockschaltbildes eines erfindungsgemäßen Sensorsystems 100 zur Ansteuerung einer kapazitiven Sensoreinrichtung 110 mit einer Sensorstruktur 11, einer Heizstruktur 12, sowie einer Abschirmeinrichtung 140 mit einem elektrisch leitenden und mit einem definierten Potenzial beaufschlagbaren Abschirmelement 14 bzw. dem Lenkradkern 13, beispielsweise gemäß Fig. 2, und einer Auswerteeinrichtung 130 in Form eines Mikrocontrollers (µC), in welchen eine Referenzkapazität 170 integriert ist.

Dabei ist die kapazitive Sensoreinrichtung 110 mittels des Signals S₁₁ mit dem Mikrocontroller 130 gekoppelt. Die Heizeinrichtung 120 mit der Heizstruktur 12 ist über das Signal S₁₂ ansteuerbar und die Abschirmeinrichtung 140 mit dem Abschirmelement 14 oder dem Lenkradkern 13 über das Signal S_{14,13}. Die Heizeinrichtung 120 bzw. die Heizstruktur 12 kann dabei in Abhängigkeit des Zustands der Sensoreinrichtung 110 vom Mikrokontroller 130 angesteuert werden, und zwar zeitlich auf die Sensoreinrichtung abgestimmt, so dass eine störende kapazitive Kopplung der Sensorstruktur mit Komponenten des Sensorsystems, wie beispielsweise der Heizeinrichtung 120, oder in einem funktionsgemäßen Einbauzustand des erfindungsgemäßen Sensorsystems in einem Lenkrad mit Komponenten des erfindungsgemäßen Lenkrads, reduziert werden kann.

Beispielsweise kann dazu die Heizeinrichtung 120 dabei mittels der elektronischen Schalter 150 und 160, welche ebenfalls vom Mikrocontroller 130 angesteuert werden können, allpolig abgeschaltet werden, so dass gewährleistet ist, dass die Heizungsrichtung 120 während der Messung bzw. der Erfassung einer Änderung der kapazitiven Kopplung der Sensorstruktur keine störende kapazitive Kopplung mit der Sensorstruktur 11 mehr bewirkt.

Bei dem Schalter 150 handelt es sich um einen sogenannten High-Side-Switch zur Schaltung einer positiven Versorgungsspannung handelt und bei dem Schalter 160 um einen sogenannten Low-Side-Switch zum Schalten einer negativen Versorgungsspannung bzw. von Masse (GND). Selbstverständlich ist während dieser Zeit kein Heizbetrieb möglich.

Außerdem können das Abschirmelement 14 und/oder der Lenkradkern 13 jeweils allein oder in Kombination in Abhängigkeit des Zustands der Sensoreinrichtung 110 vom Mikrokontroller 130 mit einem definierten elektrischen Potenzial beaufschlagt werden und als aktives Abschirmelement betrieben werden, d.h. als "Guard".

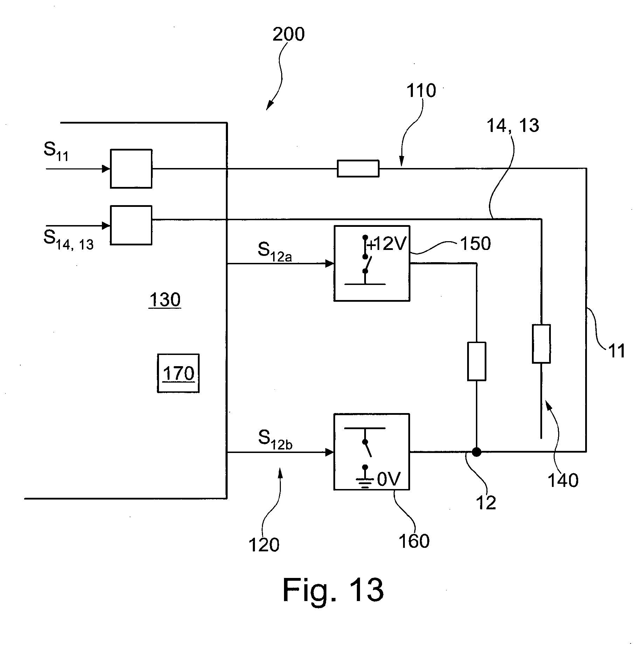

Das in Fig. 13 ausschnittsweise, dargestellte Blockschaltbild zeigt die Schaltung zur Steuerung eines alternativen Sensorsystems 200, bei welchem die Sensorstruktur 11 durch die Heizstruktur 12 gebildet wird, wie beispielsweise bei dem in den Fig. 5 gezeigten Ausführungsbeispiel eines erfindungsgemäßen Lenkrads 20.

Zum Betrieb eines entsprechenden erfindungsgemäßen Sensorsystems 200, bei welchen die Sensorstruktur 11 durch die Heizstruktur 12 gebildet wird, muss zunächst zwingend die Heizeinrichtung 120 mithilfe der Schalter 150 und 160 allpolig abgeschaltet werden, so dass der Heizbetrieb unterbrochen ist und die Heizstruktur 12 als Sensoreinrichtung 110 bzw. als Sensorstruktur 11 zur Verfügung steht.

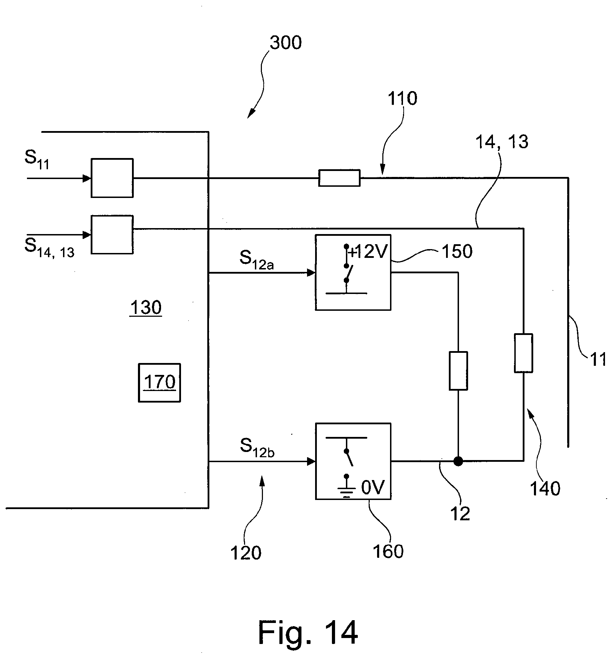

Fig. 14 zeigt einen Ausschnitt eines Blockschaltbildes zur Steuerung eines weiteren alternativen Sensorsystems 300, wobei in diesem Fall die Heizeinrichtung 120 bzw. insbesondere die Heizstruktur 12 mit einem definierten elektrischen Potenzial beaufschlagbar ist, wobei die Heizstruktur 12 dabei mittels der Schalter 150 und 160 allpolig abgeschaltet werden kann und über das Signal S_{14,13} vom Mikrocontroller 130 angesteuert und mit einem definierten elektrischen Potenzial zur Abschirmung der Sensorstruktur 11 von störenden kapazitiven Kopplungen beaufschlagt werden kann.

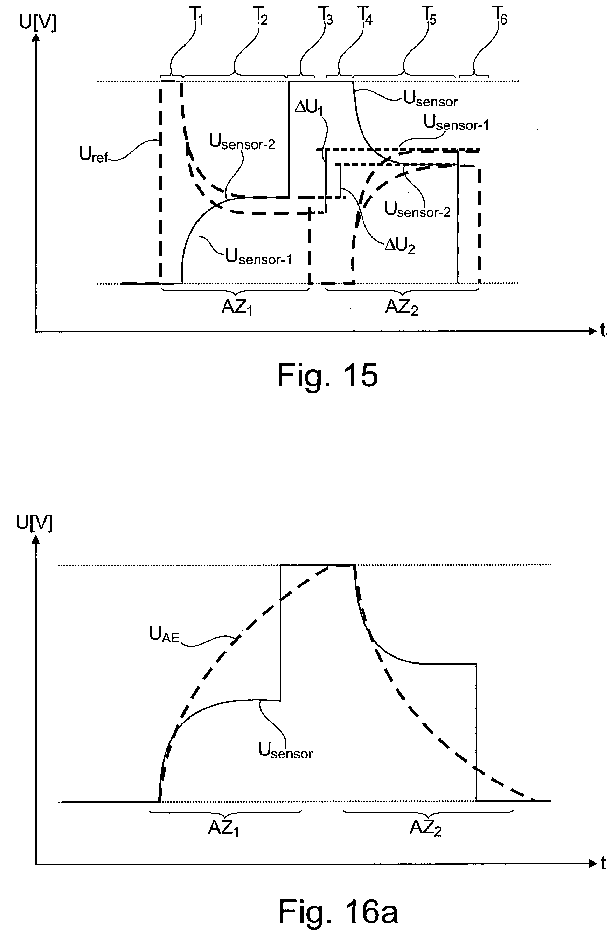

Fig. 15 zeigt schematisch den Verlauf des an der Sensorstruktur anliegenden elektrischen Potenzials U_{Sensor} während der Erfassung einer Änderung der kapazitiven Kopplung der Sensorstruktur mit der Umgebung bzw. einer Referenzelektrode nach dem CVD-Self-oder Mutual-Verfahren der Firma "Microchip", wobei dieser Verlauf entsteht, in dem während eines ersten Abtastzyklus AZ₁ in einem ersten Schritt im Zeitraum T₁ die Referenzkapazität 170 und die mit der Umgebung und/oder einer Referenzelektrode kapazitiv gekoppelte Sensorstruktur 11 definiert aufgeladen werden, beispielsweise die Referenzkapazität mit 5V und die Sensorstruktur 11, wie gezeigt mit 0V und anschließend in einem Zeitraum T₂ die Referenzkapazität 170 und die Sensorstruktur 11 kurzgeschlossen werden. Dann wird von der Auswerteeinrichtung 130 in einem Zeitraum T₃ das sich zwischen der Referenzkapazität 170 und der Sensorstruktur 11 einstellende Potenzial U_{Sensor} erfasst, das beispielweise 2,5 V beträgt.

Anschließend wird der Vorgang in einem zweiten Abtastzyklus AZ₂ wiederholt, jedoch werden die Referenzkapazität während des Zeitraums T₄ umgekehrt aufgeladen, d.h. die Referenzkapazität jetzt mit 0V und die Sensorstruktur 11 mit 5V. Im Zeitraum T₅ werden diese wieder kurzgeschlossen und das sich einstellende, an der Sensorstruktur 11 anliegende Potenzial U_{Sensor} erfasst.

Befindet sich dabei, d.h. während der zwei Abtastzyklen AZ₁ und AZ₂, eine menschliche Hand oder ein Teil davon, beispielsweise ein Finger 16 im Detektionsbereich der Sensorstruktur 11, stellt sich das Potenzial U_{Sensor-1} ein, andernfalls aufgrund der veränderten kapazitiven Kopplung der Umgebung und/oder einer Referenzelektrode mit der Sensorstruktur 11 das Potenzial U_{Sensor-2}. Anhand der sich ergebenden Differenz ΔU₁ bzw. ΔU₂ aus dem sich nach dem ersten Abtastzyklus AZ₁ einstellenden Potenzial und dem sich nach dem zweiten Abtastzyklus AZ₂ einstellenden Potenzial kann somit, insbesondere spätestens nach vier Abtastzyklen, erkannt werden, ob sich eine menschliche Hand oder ein Teil davon im Detektionsbereich der Sensorstruktur 11 befindet oder nicht.

Fig. 16a zeigt schematisch einen beispielhaften, vorteilhaften Verlauf eines nachgeführten elektrischen Potenzials U_{AE}, mit dem ein aktives Abschirmelement beaufschlagt werden kann, beispielsweise eine Heizstruktur 12 oder ein elektrisch leitendes, flächiges Abschirmelement 14. Dabei nimmt das Potenzial U_{AE} zu, wenn das an der Sensorstruktur 11 anliegende Potenzial U_{Sensor} zunimmt und ab, wenn das an der Sensorstruktur 11 anliegende Potenzial U_{Sensor} abnimmt. Mit einer derartigen Beaufschlagung eines Abschirmelementes kann die Abschirmleistung bereits deutlich verbessert werden.

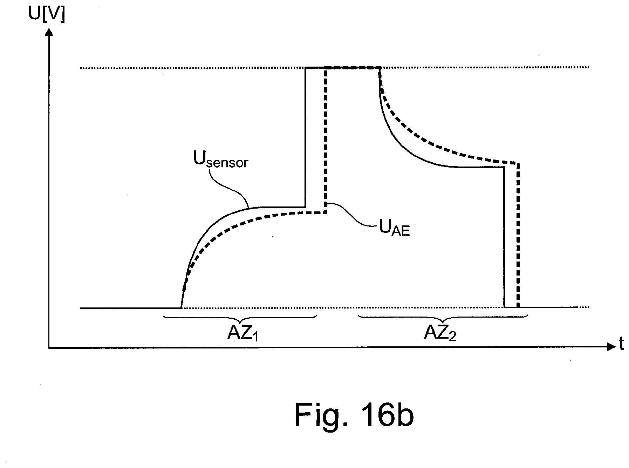

Für eine noch bessere Abschirmung, sollte das definierte elektrische Potenzial U_{AE}, mit welchem das Abschirmelement beaufschlagt wird, dem an der Sensorstruktur 11 anliegenden elektrischen Potenzial U_{Sensor} möglichst gut folgen, vorzugsweise wie in Fig. 16b dargestellt.

Fig. 16b zeigt schematisch den Verlauf eines elektrischen Potenzials eines aktiven Abschirmelementes, das dem Verlauf des an der Sensorstruktur 11 anliegenden elektrischen Potenzial U_{Sensor} folgt, d.h. nahezu den gleichen Kurvenverlauf aufweist.

## Patentansprüche

1. Sensorsystem (100, 200, 300) für ein Lenkrad (10, 20) eines Kraftfahrzeugs mit wenigstens einer kapazitiven Sensoreinrichtung, wenigstens einer Heizeinrichtung und mit wenigstens einer Steuereinrichtung, wobei die kapazitive Sensoreinrichtung wenigstens eine elektrisch leitfähige Sensorstruktur (11) aufweist und zur Erkennung einer Anwesenheit einer menschlichen Hand in einem Greifbereich eines Lenkrads (10, 20) ausgebildet ist, wobei das Sensorsystem (100, 200, 300) derart ausgebildet ist, dass die Anwesenheit einer menschlichen Hand in einem Detektionsbereich der Sensorstruktur (11) jeweils eine erfassbare, der Sensorstruktur (11) zugeordnete Änderung einer kapazitiven Kopplung der Sensorstruktur (11) mit der Umgebung und/oder einer Referenzelektrode gegenüber einem Referenzzustand ohne Anwesenheit einer Hand im Detektionsbereich der Sensorstruktur (11) bewirkt, wobei die Heizeinrichtung wenigstens eine elektrisch leitfähige Heizstruktur (12) zur Heizung des Lenkrads (10, 20) aufweist, und wobei die Steuereinrichtung zur Ansteuerung der Sensoreinrichtung und/oder zur Ansteuerung der Heizeinrichtung ausgebildet ist, wobei das Sensorsystem (100, 200, 300) dazu ausgebildet ist, die Sensoreinrichtung und die Heizeinrichtung aufeinander abgestimmt anzusteuern, insbesondere zeitlich aufeinander abgestimmt,
**dadurch gekennzeichnet, dass** die Sensoreinrichtung und die Heizeinrichtung derart aufeinander abgestimmt ansteuerbar sind, dass eine störende kapazitive Kopplung der Sensoreinrichtung mit der Heizeinrichtung und/oder in einem funktionsgemäßen Einbauzustand des Sensorsystems (100, 200, 300) in einem Lenkrad (10, 20) mit Komponenten des Lenkrads (10, 20) während der Erfassung einer Änderung der kapazitiven Kopplung der Sensorstruktur (11) mit der Umgebung und/oder einer Referenzelektrode reduziert wird, insbesondere vermieden wird,
wobei während der Erfassung einer Änderung der kapazitiven Kopplung der Sensorstruktur (11) mit der Umgebung und/oder einer Referenzelektrode wenigstens eine Heizstruktur (12) allpolig abschaltbar ist.

2. Sensorsystem (100, 300) nach Anspruch 1, **dadurch gekennzeichnet, dass** wenigstens eine Heizstruktur (12) zumindest teilweise eine Sensorstruktur (11) bildet, wobei die Heizstruktur (12) während der Erfassung der Änderung der kapazitiven Kopplung der Sensorstruktur (11) mit der Umgebung und/oder einer Referenzelektrode allpolig abschaltbar ist.

3. Sensorsystem (100, 300) nach einem der vorgenannten Ansprüche, **dadurch gekennzeichnet, dass** die Heizeinrichtung und die Sensoreinrichtung derart aufeinander abgestimmt ansteuerbar sind, dass während der Erfassung einer Änderung der kapazitiven Kopplung der Sensorstruktur (11) mit der Umgebung und/oder einer Referenzelektrode eine Heizleistung wenigstens einer Heizstruktur (12) konstant ist.

4. Sensorsystem (100, 300) nach einem der vorgenannten Ansprüche, **dadurch gekennzeichnet, dass** das Sensorsystem (100, 300) eine Heizeinrichtung mit wenigstens einer, von der Sensorstruktur (11) verschiedene Heizstruktur (12) aufweist, die mittels einer Pulsweitenmodulation mit einem Pulsweitenmodulations-Signal (70) ansteuerbar ist, wobei die Heizeinrichtung und die Sensoreinrichtung derart aufeinander abgestimmt ansteuerbar sind, dass die Erfassung einer Änderung (80) der kapazitiven Kopplung der Sensorstruktur (11) mit der Umgebung und/oder einer Referenzelektrode erfolgt, während das Pulsweitenmodulations-Signal (70) konstant ist.

5. Sensorsystem (100, 300) nach Anspruch 1, **dadurch gekennzeichnet, dass** das Sensorsystem (100, 300) derart ausgebildet ist, dass in einem funktionsgemäßen Einbauzustand des Sensorsystems (100, 300) in einem Lenkrad (10) mit einem metallischen Lenkradkern (13) während der Erfassung einer Änderung der kapazitiven Kopplung der Sensorstruktur (11) mit der Umgebung und/oder einer Referenzelektrode wenigstens eine, von der Sensorstruktur (11) verschiedene Heizstruktur (12) derart mit einem definierten elektrischen Potenzial (U_{AE}) beaufschlagbar ist, dass die Heizstruktur (12) als Abschirmelement gegenüber dem metallischen Lenkradkern (13) wirkt, so dass eine störende kapazitive Kopplung zwischen dem Lenkradkern (13) und der Sensoreinrichtung reduziert wird.

6. Sensorsystem (100, 300) nach Anspruch 5, **dadurch gekennzeichnet, dass** das definierte elektrische Potenzial (U_{AE}), mit welchem die Heizstruktur (12) während der Erfassung einer Änderung der kapazitiven Kopplung der Sensorstruktur (11) mit der Umgebung und/oder einer Referenzelektrode beaufschlagbar ist, einem während der Erfassung der Änderung der kapazitiven Kopplung an der Sensorstruktur (11) anliegenden Potenzial (U_{Sensor}) zumindest teilweise nachgeführt ist und insbesondere dem Verlauf des an der Sensorstruktur (11) anliegenden Potenzials (Usensor) folgt.

7. Sensorsystem (100, 200, 300) nach einem der vorgenannten Ansprüche, **dadurch gekennzeichnet, dass** das Sensorsystem (100, 200, 300) eine Abschirmeinrichtung aufweist, die in einem funktionsgemäßen Einbauzustand des Sensorsystems (100, 200, 300) in einem Lenkrad (10, 20) mit einem metallischen Lenkradkern (13) eine Abschirmung der kapazitiven Sensoreinrichtung gegenüber dem Lenkradkern (13) bewirkt, wobei die Abschirmeinrichtung dazu vorzugsweise wenigstens ein Abschirmelement (14) aufweist, insbesondere ein flächiges Abschirmelement (14) mit einer Außenseite und einer Innenseite.

8. Sensorsystem (100, 200, 300) nach Anspruch 7, **dadurch gekennzeichnet, dass** das Sensorsystem (100, 200, 300) mit dem Abschirmelement (14) derart in einem Lenkrad (10, 20) mit einem Lenkradkern (13) anordbar ist, dass in einem funktionsgemäßen Einbauzustand des Sensorsystems (100, 200, 300) in einem Lenkrad (10, 20) die Innenseite wenigstens eines Abschirmelementes dem Lenkradkern (13) zugewandt ist und diesen teilweise umgreift und die Außenseite der Sensorstruktur (11) zugewandt ist, wobei sich vorzugsweise wenigstens eine Heizstruktur (12) im Bereich der Außenseite des Abschirmelementes (14) befindet.

9. Sensorsystem (100, 200, 300) nach Anspruch 7 oder 8, **dadurch gekennzeichnet, dass** das Sensorsystem (100, 200, 300) auch zur Ansteuerung der Abschirmeinrichtung ausgebildet ist, wobei das Sensorsystem (100, 200, 300) vorzugsweise derart ausgebildet ist, dass die Sensoreinrichtung und die Abschirmeinrichtung aufeinander abgestimmt ansteuerbar sind, insbesondere zeitlich aufeinander abgestimmt.

10. Sensorsystem (100, 200, 300) nach Anspruch 9, **dadurch gekennzeichnet, dass** das Abschirmelement (14) der Abschirmeinrichtung während der Erfassung einer Änderung der kapazitiven Kopplung der Sensorstruktur (11) mit der Umgebung und/oder einer Referenzelektrode derart mit einem definierten elektrischen Potenzial (U_{AE}) beaufschlagbar ist, dass in einem funktionsgemäßen Einbauzustand des Sensorsystems (100, 200, 300) in einem Lenkrad (10, 20) mit einem metallischen Lenkradkern (13) die kapazitive Kopplung zwischen dem Lenkradkern (13) und der Sensoreinrichtung reduziert wird.

11. Sensorsystem (100, 200, 300) nach Anspruch 10, **dadurch gekennzeichnet, dass** das definierte elektrische Potenzial (U_{AE}), mit welchem das Abschirmelement (14) während der Erfassung einer Änderung der kapazitiven Kopplung der Sensorstruktur (11) mit der Umgebung und/oder einer Referenzelektrode beaufschlagbar ist, einem während der Erfassung der Änderung der kapazitiven Kopplung an der Sensorstruktur (11) anliegenden Potenzial (U_{Sensor}) zumindest teilweise nachgeführt ist und insbesondere dem Verlauf des an der Sensorstruktur (11) anliegenden Potenzials (U_{Sensor}) folgt.

12. Sensorsystem (100, 200, 300) nach einem der vorgenannten Ansprüche, **dadurch gekennzeichnet, dass** das Sensorsystem (100, 200, 300) derart ausgebildet und mit einem metallischen Lenkradkern (13) eines Lenkrads (10, 20) koppelbar ist, dass in einem funktionsgemäßen Einbauzustand des Sensorsystems (100, 200, 300) in einem Lenkrad (10, 20) mit einem metallischen Lenkradkern (13) der Lenkradkern (13) während der Erfassung der Änderung der kapazitiven Kopplung der Sensorstruktur (11) mit der Umgebung und/oder einer Referenzelektrode derart mit einem definierten elektrischen Potenzial (U_{AE}) beaufschlagbar ist, dass während der Erfassung der Änderung der kapazitiven Kopplung der Sensorstruktur (11) mit der Umgebung und/oder einer Referenzelektrode die kapazitive Kopplung zwischen dem Lenkradkern (13) und der Sensoreinrichtung reduziert wird.

13. Sensorsystem (100, 200, 300) nach Anspruch 12, **dadurch gekennzeichnet, dass** das definierte elektrische Potenzial (U_{AE}), mit welchem der Lenkradkern (13) während einer Erfassung der Änderung der kapazitiven Kopplung der Sensorstruktur (11) mit der Umgebung und/oder einer Referenzelektrode beaufschlagbar ist, einem während der Erfassung der Änderung der kapazitiven Kopplung an der Sensorstruktur (11) anliegenden Potenzial (U_{Sensor}) zumindest teilweise nachgeführt ist und insbesondere dem Verlauf des an der Sensorstruktur (11) anliegenden Potenzials (U_{Sensor}) folgt.

14. Lenkrad (10, 20) mit einem Sensorsystem (100, 200, 300) mit einer kapazitiven Sensoreinrichtung, wobei das Sensorsystem (100, 200, 300) insbesondere zur Hands-On-Off-Erkennung ausgebildet ist, **dadurch gekennzeichnet, dass** das Sensorsystem (100, 200, 300) nach einem der Ansprüche 1 bis 13 ausgebildet ist.

15. Verfahren zum Betrieb eines Sensorsystems (100, 200, 300) mit wenigstens einer kapazitiven Sensoreinrichtung, wenigstens einer Heizeinrichtung und mit wenigstens einer Steuereinrichtung, wobei die kapazitive Sensoreinrichtung wenigstens eine elektrisch leitfähige Sensorstruktur (11) aufweist und zur Erkennung einer Anwesenheit einer menschlichen Hand in einem Greifbereich eines Lenkrads (10, 20) ausgebildet ist, wobei das Sensorsystem (100, 200, 300) derart ausgebildet ist, dass die Anwesenheit einer menschlichen Hand in einem Detektionsbereich der Sensorstruktur (11) jeweils eine erfassbare, der Sensorstruktur (11) zugeordnete Änderung einer kapazitiven Kopplung der Sensorstruktur (11) mit der Umgebung und/oder einer Referenzelektrode gegenüber einem Referenzzustand ohne Anwesenheit einer Hand im Detektionsbereich bewirkt, wobei die Heizeinrichtung wenigstens eine elektrisch leitfähige Heizstruktur (12) zur Heizung des Lenkrades aufweist, und wobei die Steuereinrichtung zur Ansteuerung der Sensoreinrichtung und/oder zur Ansteuerung der Heizeinrichtung ausgebildet ist, wobei ein Zustand der Sensoreinrichtung erfasst wird und ein Zustand der Heizeinrichtung und die Sensoreinrichtung und die Heizeinrichtung in Abhängigkeit ihrer erfassten Zustände aufeinander abgestimmt angesteuert werden, **dadurch gekennzeichnet, dass** die Sensoreinrichtung und die Heizeinrichtung derart aufeinander abgestimmt angesteuert werden, dass eine kapazitive Kopplung der Sensoreinrichtung mit der Heizeinrichtung und/oder in einem funktionsgemäßen Einbauzustand des Sensorsystems (100, 200, 300) in einem Lenkrad (10, 20) mit Komponenten des Lenkrads (10, 20) während der Erfassung einer Änderung der kapazitiven Kopplung der Sensorstruktur (11) mit der Umgebung und/oder einer Referenzelektrode reduziert wird, insbesondere vermieden wird,
wobei während der Erfassung einer Änderung der kapazitiven Kopplung der Sensorstruktur (11) mit der Umgebung und/oder einer Referenzelektrode wenigstens eine Heizstruktur (12) allpolig abgeschaltet wird.

## Claims

1. Sensor system (100, 200, 300) for a steering wheel (10, 20) of a motor vehicle having at least one capacitive sensor device, at least one heating device and having at least one control device, wherein the capacitive sensor device has at least one electrically conductive sensor structure (11) and is designed to detect a presence of a human hand in a gripping region of a steering wheel (10, 20), wherein the sensor system (100, 200, 300) is in a form such that the presence of a human hand in a detection region of the sensor structure (11) causes a respective detectable change, associated with the sensor structure (11), in a capacitive coupling of the sensor structure (11) to the surroundings and/or a reference electrode as compared with a reference state without the presence of a hand in the detection region of the sensor structure (11), wherein the heating device has at least one electrically conductive heating structure (12) for heating the steering wheel (10, 20), and wherein the control device is designed to actuate the sensor device and/or to actuate the heating device, wherein the sensor system (100, 200, 300) is designed to actuate the sensor device and the heating device in a manner coordinated to one another, in particular coordinated to one another in terms of timing, **characterized in that** the sensor device and the heating device are actuatable in a manner coordinated to one another such that an interfering capacitive coupling of the sensor device to the heating device and/or, in a functionally compliant installed state of the sensor system (100, 200, 300) in a steering wheel (10, 20), to components of the steering wheel (10, 20), is reduced, in particular avoided, during the detection of a change in the capacitive coupling of the sensor structure (11) to the surroundings and/or a reference electrode, wherein at least one heating structure (12) is able to be switched off at all poles during the detection of a change in the capacitive coupling of the sensor structure (11) to the surroundings and/or a reference electrode.

2. Sensor system (100, 300) according to Claim 1, **characterized in that** at least one heating structure (12) at least partially forms a sensor structure (11), wherein the heating structure (12) is able to be switched off at all poles during the detection of the change in the capacitive coupling of the sensor structure (11) to the surroundings and/or a reference electrode.

3. Sensor system (100, 300) according to either of the preceding claims, **characterized in that** the heating device and the sensor device are actuatable in a manner coordinated to one another such that a heating power of at least one heating structure (12) is constant during the detection of a change in the capacitive coupling of the sensor structure (11) to the surroundings and/or a reference electrode.

4. Sensor system (100, 300) according to one of the preceding claims, **characterized in that** the sensor system (100, 300) has a heating device having at least one heating structure (12), different from the sensor structure (11), that is actuatable by means of a pulse-width modulation using a pulse-width modulation signal (70), wherein the heating device and the sensor device are actuatable in a manner coordinated to one another such that the detection of a change (80) in the capacitive coupling of the sensor structure (11) to the surroundings and/or a reference electrode takes place while the pulse-width modulation signal (70) is constant.

5. Sensor system (100, 300) according to Claim 1, **characterized in that** the sensor system (100, 300) is designed such that in a functionally compliant installed state of the sensor system (100, 300) in a steering wheel (10) having a metal steering wheel core (13), at least one heating structure (12), different from the sensor structure (11), is able to have a defined electrical potential (U_{AE}) applied to it during the detection of a change in the capacitive coupling of the sensor structure (11) to the surroundings and/or a reference electrode such that the heating structure (12) acts as a screening element with respect to the metal steering core (13), so that an interfering capacitive coupling between the steering wheel core (13) and the sensor device is reduced.

6. Sensor system (100, 300) according to Claim 5, **characterized in that** the defined electrical potential (U_{AE}) that is able to be applied to the heating structure (12) during the detection of a change in the capacitive coupling of the sensor structure (11) to the surroundings and/or a reference electrode is at least partially tracked to a potential (U_{Sensor}) applied to the sensor structure (11) during the detection of the change in the capacitive coupling and in particular follows the characteristic of the potential (U_{Sensor}) applied to the sensor structure (11).

7. Sensor system (100, 200, 300) according to one of the preceding claims, **characterized in that** the sensor system (100, 200, 300) has a screening device that causes screening of the capacitive sensor device with respect to the steering wheel core (13) in a functionally compliant installed state of the sensor system (100, 200, 300) in a steering wheel (10, 20) having a metal steering wheel core (13), wherein the screening device, to this end, preferably has at least one screening element (14), in particular a flat screening element (14) having an outer side and an inner side.

8. Sensor system (100, 200, 300) according to Claim 7, **characterized in that** the sensor system (100, 200, 300) is arrangeable with the screening element (14) in a steering wheel (10, 20) having a steering wheel core (13) such that in a functionally compliant installed state of the sensor system (100, 200, 300) in a steering wheel (10, 20), the inner side of at least one screening element faces the steering wheel core (13) and partially encompasses it and the outer side faces the sensor structure (11), wherein there is preferably at least one heating structure (12) in the region of the outer side of the screening element (14).

9. Sensor system (100, 200, 300) according to Claim 7 or 8, **characterized in that** the sensor system (100, 200, 300) is also designed to actuate the screening device, wherein the sensor system (100, 200, 300) is preferably in a form such that the sensor device and the screening device are actuatable in a manner coordinated to one another, in particular in a manner coordinated to one another in terms of timing.

10. Sensor system (100, 200, 300) according to Claim 9, **characterized in that** the screening element (14) of the screening device is able to have a defined electrical potential (U_{AE}) applied to it during the detection of a change in the capacitive coupling of the sensor structure (11) to the surroundings and/or a reference electrode such that the capacitive coupling between the steering wheel core (13) and the sensor device is reduced in a functionally compliant installed state of the sensor system (100, 200, 300) in a steering wheel (10, 20) having a metal steering wheel core (13).

11. Sensor system (100, 200, 300) according to Claim 10, **characterized in that** the defined electrical potential (U_{AE}) that is able to be applied to the screening element (14) during the detection of a change in the capacitive coupling of the sensor structure (11) to the surroundings and/or a reference electrode is at least partially tracked to a potential (U_{Sensor}) applied to the sensor structure (11) during the detection of the change in the capacitive coupling and in particular follows the characteristic of the potential (U_{Sensor}) applied to the sensor structure (11).

12. Sensor system (100, 200, 300) according to one of the preceding claims, **characterized in that** the sensor system (100, 200, 300) is in a form, and couplable to a metal steering wheel core (13) of a steering wheel (10, 20), such that in a functionally compliant installed state of the sensor system (100, 200, 300) in a steering wheel (10, 20) having a metal steering wheel core (13), the steering wheel core (13) is able to have a defined electrical potential (U_{AE}) applied to it during the detection of the change in the capacitive coupling of the sensor structure (11) to the surroundings and/or a reference electrode such that the capacitive coupling between the steering wheel core (13) and the sensor device is reduced during the detection of the change in the capacitive coupling of the sensor structure (11) to the surroundings and/or a reference electrode.

13. Sensor system (100, 200, 300) according to Claim 12, **characterized in that** the defined electrical potential (U_{AE}) that is able to be applied to the steering wheel core (13) during detection of the change in the capacitive coupling of the sensor structure (11) to the surroundings and/or a reference electrode is at least partially tracked to a potential (U_{Sensor}) applied to the sensor structure (11) during the detection of the change in the capacitive coupling and in particular follows the characteristic of the potential (U_{Sensor}) applied to the sensor structure (11).

14. Steering wheel (10, 20) having a sensor system (100, 200, 300) having a capacitive sensor device, wherein the sensor system (100, 200, 300) is in particular designed for hands-on/off detection, **characterized in that** the sensor system (100, 200, 300) is in a form according to one of Claims 1 to 13.

15. Method for operating a sensor system (100, 200, 300) having at least one capacitive sensor device, at least one heating device and having at least one control device, wherein the capacitive sensor device has at least one electrically conductive sensor structure (11) and is designed to detect a presence of a human hand in a gripping region of a steering wheel (10, 20), wherein the sensor system (100, 200, 300) is in a form such that the presence of a human hand in a detection region of the sensor structure (11) causes a respective detectable change, associated with the sensor structure (11), in a capacitive coupling of the sensor structure (11) to the surroundings and/or a reference electrode as compared with a reference state without the presence of a hand in the detection region, wherein the heating device has at least one electrically conductive heating structure (12) for heating the steering wheel, and wherein the control device is designed to actuate the sensor device and/or to actuate the heating device, wherein a state of the sensor device is detected and a state of the heating device, and the sensor device and the heating device are actuated in a manner coordinated to one another on the basis of their detected states, **characterized in that** the sensor device and the heating device are actuated in a manner coordinated to one another such that a capacitive coupling of the sensor device to the heating device and/or, in a functionally compliant installed state of the sensor system (100, 200, 300) in a steering wheel (10, 20), to components of the steering wheel (10, 20) is reduced, in particular avoided, during the detection of a change in the capacitive coupling of the sensor structure (11) to the surroundings and/or a reference electrode,
wherein at least one heating structure (12) is switched off at all poles during the detection of a change in the capacitive coupling of the sensor structure (11) to the surroundings and/or a reference electrode.

## Revendications

1. Système capteur (100, 200, 300) pour un volant de direction (10, 20) d'un véhicule automobile, comprenant au moins un dispositif capteur capacitif, au moins un dispositif de chauffage et comprenant au moins un dispositif de commande, le dispositif capteur capacitif possédant au moins une structure de capteur (11) électriquement conductrice et étant configuré pour reconnaître une présence d'une main humaine dans une zone de préhension d'un volant de direction (10, 20), le système capteur (100, 200, 300) étant configuré de telle sorte que la présence d'une main humaine dans une zone de détection de la structure de capteur (11) provoque à chaque fois une modification détectable associée à la structure de capteur (11) d'un couplage capacitif de la structure de capteur (11) avec l'environnement et/ou une électrode de référence par rapport à un état de référence sans présence d'une main dans la zone de détection de la structure de capteur (11), le dispositif de chauffage possédant au moins une structure chauffante (12) électriquement conductrice destinée à chauffer le volant de direction (10, 20) et le dispositif de commande étant configuré pour commander le dispositif capteur et/ou pour commander le dispositif de chauffage, le système capteur (100, 200, 300) étant configuré pour commander le dispositif capteur et le dispositif de chauffage de manière coordonnée, notamment coordonnée dans le temps, **caractérisé en ce que** le dispositif capteur et le dispositif de chauffage peuvent être commandés de manière coordonnée de telle sorte qu'un couplage capacitif parasite du dispositif capteur avec le dispositif de chauffage et/ou, dans un état d'installation conforme à sa fonction du système capteur (100, 200, 300) dans un volant de direction (10, 20), avec les composants du volant de direction (10, 20) pendant la détection d'une modification du couplage capacitif de la structure de capteur (11) avec l'environnement et/ou une électrode de référence est réduit, notamment évité,
au moins une structure chauffante (12) pouvant être déconnectée par tous ses pôles pendant la détection d'une modification du couplage capacitif de la structure de capteur (11) avec l'environnement et/ou une électrode de référence.

2. Système capteur (100, 300) selon la revendication 1, **caractérisé en ce qu'**au moins une structure chauffante (12) forme au moins partiellement une structure de capteur (11), la structure chauffante (12) pouvant être déconnectée par tous ses pôles pendant la détection de la modification du couplage capacitif de la structure de capteur (11) avec l'environnement et/ou une électrode de référence.

3. Système capteur (100, 300) selon l'une des revendications précédentes, **caractérisé en ce que** le dispositif de chauffage et le dispositif capteur peuvent être commandés de manière coordonnée de telle sorte qu'une puissance de chauffage d'au moins une structure chauffante (12) est constante pendant la détection d'une modification du couplage capacitif de la structure de capteur (11) avec l'environnement et/ou une électrode de référence.

4. Système capteur (100, 300) selon l'une des revendications précédentes, **caractérisé en ce que** le système capteur (100, 300) possède un dispositif de chauffage pourvu d'au moins une structure chauffante (12) différente de la structure de capteur (11), laquelle peut être commandée au moyen d'une modulation d'impulsions en largeur avec un signal de modulation d'impulsions en largeur (70), le dispositif de chauffage et le dispositif capteur pouvant être commandés de manière coordonnée de telle sorte que la détection d'une modification (80) du couplage capacitif de la structure de capteur (11) avec l'environnement et/ou une électrode de référence s'effectue pendant que le signal de modulation d'impulsions en largeur (70) est constant.

5. Système capteur (100, 300) selon la revendication 1, **caractérisé en ce que** le système capteur (100, 300) est configuré de telle sorte que dans un état d'installation conforme à sa fonction du système capteur (100, 300) dans un volant de direction (10) pourvu d'un noyau de volant de direction (13) métallique, au moins une structure chauffante (12) différente de la structure de capteur (11) peut être alimentée avec un potentiel électrique (U_{AE}) défini pendant la détection d'une modification du couplage capacitif de la structure de capteur (11) avec l'environnement et/ou une électrode de référence de telle sorte que la structure chauffante (12) agit comme un élément de blindage par rapport au noyau de volant de direction (13) métallique, de sorte qu'un couplage capacitif parasite entre le noyau de volant de direction (13) et le dispositif capteur est réduit.

6. Système capteur (100, 300) selon la revendication 5, **caractérisé en ce que** le potentiel électrique (U_{AE}) défini avec lequel peut être alimentée la structure chauffante (12) pendant la détection d'une modification du couplage capacitif de la structure de capteur (11) avec l'environnement et/ou une électrode de référence est au moins partiellement asservi à un potentiel (Usensor) appliqué à la structure de capteur (11) pendant la détection de la modification du couplage capacitif et suit notamment le tracé du potentiel (Usensor) appliqué à la structure de capteur (11).

7. Système capteur (100, 200, 300) selon l'une des revendications précédentes, **caractérisé en ce que** le système capteur (100, 200, 300) possède un dispositif de blindage qui, dans un état d'installation conforme à sa fonction du système capteur (100, 200, 300) dans un volant de direction (10, 20) pourvu d'un noyau de volant de direction (13) métallique, produit un blindage du dispositif capteur capacitif par rapport au noyau de volant de direction (13), le dispositif de blindage possédant à cet effet de préférence au moins un élément de blindage (14), notamment un élément de blindage (14) plat ayant un côté extérieur et un côté intérieur.

8. Système capteur (100, 200, 300) selon la revendication 7, **caractérisé en ce que** le système capteur (100, 200, 300) muni de l'élément de blindage (14) peut être disposé dans un volant de direction (10, 20) pourvu d'un noyau de volant de direction (13) de telle sorte que dans un état d'installation conforme à sa fonction du système capteur (100, 200, 300) dans un volant de direction (10, 20), le côté intérieur d'au moins un élément de blindage fait face au noyau de volant de direction (13) et entoure celui-ci partiellement et le côté extérieur fait face à la structure de capteur (11), au moins une structure chauffante (12) se trouvant de préférence dans la zone du côté extérieur de l'élément de blindage (14).

9. Système capteur (100, 200, 300) selon la revendication 7 ou 8, **caractérisé en ce que** le système capteur (100, 200, 300) est également configuré pour commander le dispositif de blindage, le système capteur (100, 200, 300) étant de préférence configuré de telle sorte que le dispositif capteur et le dispositif de blindage peuvent être commandés de manière coordonnée, notamment coordonnée dans le temps.

10. Système capteur (100, 200, 300) selon la revendication 9, **caractérisé en ce que** l'élément de blindage (14) du dispositif de blindage peut être alimenté avec un potentiel électrique (U_{AE}) défini pendant la détection d'une modification du couplage capacitif de la structure de capteur (11) avec l'environnement et/ou une électrode de référence de telle sorte que dans un état d'installation conforme à sa fonction du système capteur (100, 200, 300) dans un volant de direction (10, 20) pourvu d'un noyau de volant de direction (13) métallique, le couplage capacitif parasite entre le noyau de volant de direction (13) et le dispositif capteur est réduit.

11. Système capteur (100, 200, 300) selon la revendication 10, **caractérisé en ce que** le potentiel électrique (U_{AE}) défini avec lequel peut être alimenté l'élément de blindage (14) pendant la détection d'une modification du couplage capacitif de la structure de capteur (11) avec l'environnement et/ou une électrode de référence est au moins partiellement asservi à un potentiel (Usensor) appliqué à la structure de capteur (11) pendant la détection de la modification du couplage capacitif et suit notamment le tracé du potentiel (Usensor) appliqué à la structure de capteur (11).

12. Système capteur (100, 200, 300) selon l'une des revendications précédentes, **caractérisé en ce que** le système capteur (100, 200, 300) est configuré et peut être couplé à un noyau de volant de direction (13) métallique d'un volant de direction (10, 20) de telle sorte que dans un état d'installation conforme à sa fonction du système capteur (100, 200, 300) dans un volant de direction (10, 20) pourvu d'un noyau de volant de direction (13) métallique, le noyau de volant de direction (13) peut être alimenté avec un potentiel électrique (U_{AE}) défini pendant la détection de la modification du couplage capacitif de la structure de capteur (11) avec l'environnement et/ou une électrode de référence de telle sorte que pendant la détection de la modification du couplage capacitif de la structure de capteur (11) avec l'environnement et/ou une électrode de référence, le couplage capacitif parasite entre le noyau de volant de direction (13) et le dispositif capteur est réduit.

13. Système capteur (100, 200, 300) selon la revendication 12, **caractérisé en ce que** le potentiel électrique (U_{AE}) défini avec lequel peut être alimenté le noyau de volant de direction (13) pendant la détection de la modification du couplage capacitif de la structure de capteur (11) avec l'environnement et/ou une électrode de référence est au moins partiellement asservi à un potentiel (Usensor) appliqué à la structure de capteur (11) pendant la détection de la modification du couplage capacitif et suit notamment le tracé du potentiel (Usensor) appliqué à la structure de capteur (11).

14. Volant de direction (10, 20) comprenant un système capteur (100, 200, 300), le système capteur (100, 200, 300) étant notamment configuré pour une reconnaissance d'application/de retrait des mains, **caractérisé en ce que** le système capteur (100, 200, 300) est configuré selon l'une des revendications 1 à 13.

15. Procédé pour faire fonctionner un système capteur (100, 200, 300) comprenant au moins un dispositif capteur capacitif, au moins un dispositif de chauffage et comprenant au moins un dispositif de commande, le dispositif capteur capacitif possédant au moins une structure de capteur (11) électriquement conductrice et étant configuré pour reconnaître une présence d'une main humaine dans une zone de préhension d'un volant de direction (10, 20), le système capteur (100, 200, 300) étant configuré de telle sorte que la présence d'une main humaine dans une zone de détection de la structure de capteur (11) provoque à chaque fois une modification détectable associée à la structure de capteur (11) d'un couplage capacitif de la structure de capteur (11) avec l'environnement et/ou une électrode de référence par rapport à un état de référence sans présence d'une main dans la zone de détection, le dispositif de chauffage possédant au moins une structure chauffante (12) électriquement conductrice destinée à chauffer le volant de direction et le dispositif de commande étant configuré pour commander le dispositif capteur et/ou pour commander le dispositif de chauffage, un état du dispositif capteur étant détecté ainsi qu'un état du dispositif de chauffage et le dispositif capteur et le dispositif de chauffage étant commandés de manière coordonnée en fonction de leurs états détectés,
**caractérisé en ce que** le dispositif capteur et le dispositif de chauffage sont commandés de manière coordonnée de telle sorte qu'un couplage capacitif parasite du dispositif capteur avec le dispositif de chauffage et/ou, dans un état d'installation conforme à sa fonction du système capteur (100, 200, 300) dans un volant de direction (10, 20), avec les composants du volant de direction (10, 20) pendant la détection d'une modification du couplage capacitif de la structure de capteur (11) avec l'environnement et/ou une électrode de référence est réduit, notamment évité,
au moins une structure chauffante (12) étant déconnectée par tous ses pôles pendant la détection d'une modification du couplage capacitif de la structure de capteur (11) avec l'environnement et/ou une électrode de référence.
